# EUROPÄISCHE PATENTSCHRIFT

(11) **EP 4 638 325 B1**
(45) Veröffentlichungstag und Bekanntmachung des Hinweises auf die Patenterteilung: **11.11.2026**
(21) Anmeldenummer: 23833011.2
(22) Anmeldetag: 13.12.2023
(51) Int. Cl.: B65H 5/12, B65H 29/56, B65H 39/02, B65H 37/00

(54) **APPLIKATIONSSYSTEM MIT TRANSFERBAND**
APPLICATION SYSTEM HAVING A TRANSFER BELT
SYSTÈME D'APPLICATION À BANDE DE TRANSFERT

(30) Priorität: 22.12.2022 DE 102022134629
(43) Veröffentlichungstag der Anmeldung: 29.10.2025
(73) Patentinhaber: TESA SE, 22848 Norderstedt (DE)
(72) Erfinder: AKIN, Deniz Nick, 22848 Norderstedt (DE); HERBST, Lukas, 22848 Norderstedt (DE); MARTEL, Joachim, 37075 Göttingen (DE)
(74) Vertreter: tesa SE
(86) Internationale Anmeldenummer: PCT/EP2023/085546
(87) Internationale Veröffentlichungsnummer: WO 2024/132760

(56) Entgegenhaltungen:
- CN-B- 1 760 299
- JP-B2- 5 452 173
- US-A1- 2019 352 034

## Beschreibung

Die Erfindung betrifft ein Applikationssystem zur Applikation von Klebeelementen auf zu beklebende Substrate, eine Applikationsvorrichtung und eine Spendervorrichtung für den Einsatz in einem entsprechenden Applikationssystem sowie ein Verfahren zur Applikation von Klebeelementen auf zu beklebende Substrate mit einem entsprechenden Applikationssystem.

Der Einsatz von Klebeelementen ist heutzutage ein wichtiger Bestandteil vieler moderner Fertigungsverfahren. Entsprechende Klebeelemente werden dabei nicht nur zur Befestigung von Komponenten an einem Substrat verwendet, sondern dienen insbesondere auch dem Verschluss von Öffnungen in einem Substrat. Solche Öffnungen liegen zumeist fertigungsbedingt vor und stellen im späteren Produkt mögliche Schwachstellen dar, durch die beispielsweise Feuchtigkeit oder Verunreinigungen hindurchtreten können. Der Einsatz von geeigneten, zumeist einseitig klebrigen Klebeelementen zum Verschluss entsprechender Öffnungen in Subtraten stellt eine einfache sowie zeit- und kosteneffiziente Lösung dar, entsprechende Öffnungen zu verschließen und ein ungewolltes Eindringen von Verunreinigungen zu unterbinden, wobei im Stand der Technik schon heute zu diesem Zweck regelmäßig solche Klebeelemente eingesetzt werden, die infolge ihres Herstellungsverfahrens auch als Stanzlinge bezeichnet werden.

Grundsätzlich wäre es denkbar, die entsprechenden Klebeelemente manuell auf einem Substrat zu platzieren. Im Zuge der fortschreitenden Automatisierung und angesichts eines fortgesetzten Interesses an einer möglichst fehlerunanfälligen und effizienten Verfahrensführung wurden jedoch automatisierbare Applikationsvorrichtungen entwickelt, die der Applikation von Klebeelementen auf ein zu beklebendes Substrat dienen. An entsprechende Applikationsvorrichtungen werden dabei vielfältige Anforderungen gestellt. So müssen entsprechende Applikationsvorrichtungen insbesondere eine zuverlässige und reproduzierbare Applikation von Klebeelementen an die Substrate ermöglichen, wobei wünschenswerterweise ein hoher Durchsatz erreicht werden soll.

Die vergleichsweise einfachen Lösungen im Stand der Technik setzten zumeist auf ein sogenanntes "pick & place", bei dem der Endeffektor eines Roboterarms jedes Klebeelement einzeln von einer beabstandeten Spendervorrichtung aufnimmt und es anschließend am Substrat platziert. Diese Verfahrensführung wird jedoch hinsichtlich der Zeit- und Kosteneffizienz zumeist als unvorteilhaft empfunden.

Zur Optimierung der Handhabungseffizienz und zur Vermeidung aufwändiger Zuführsysteme, bei welchen die benötigten Klebeelemente von einer separaten Spendervorrichtung zumeist als Band zu der Applikationsvorrichtung geführt werden müssen, wurden Applikationsvorrichtungen mit einer integrierten Spenderanordnung für Klebeelemente konzipiert, in denen die Bereitstellung des Klebeelementes und die Applikationsvorrichtung gemeinsam, beispielsweise als Teil eines Endeffektors eines Roboterkopfes, ausgeführt werden können. Entsprechende Applikationsvorrichtungen mit integrierter Spendervorrichtung setzten dabei für eine effiziente Versorgung mit Klebeelementen häufig auf ein Nachfüllsystem, bei dem mit Klebeelementen beschickte Kleberollen in die Spenderanordnung eingesetzt werden, die nach Applikation der auf der Kleberolle enthaltenen Klebeelemente wieder entnommen und ausgetauscht werden können. Viele moderne Applikationsvorrichtungen setzten dabei auf Konzepte mit sogenannten Nachfüllkassetten, bei denen die mit Klebeelementen beschickten Kleberollen zumeist in einem Gehäuse angeordnet sind. Der Einsatz entsprechender Nachfüllkassetten erlaubt regelmäßig eine besonders schnelle, zuverlässige und fehlerunanfällige Versorgung der Applikationsvorrichtung mit den für die Applikation benötigten Klebeelementen, wobei die Nachfüllkassetten insbesondere auch bei der Lagerung und im Transport vorteilhaft sind.

Trotz der Vorteile, die mit dem Einsatz von mit Klebeelementen beschickten, auswechselbaren Kleberollen und insbesondere dem Einsatz von Nachfüllkassetten verbunden sind, wird deren Verwendung unter anderen Gesichtspunkten zuweilen auch als nachteilig empfunden. Insbesondere fallen die von Klebeelementen befreiten Kleberollen, d.h. zumeist die geleerte Trägerrolle und der verbleibende abgewickelte Liner, nach der Verwendung häufig als Abfall an, der insbesondere bei älteren Systemen nur sehr aufwendig wiederverwertet werden kann. Zudem wird auch die zeit- und kosteneffiziente Herstellung frischer, mit Klebeelementen beschickter Kleberollen, welche beispielsweise direkt in Applikationsvorrichtungen oder in einer Nachfüllkassette eingesetzt werden können, in vielen Fällen als herausfordernd empfunden. Die zumeist als EndEffektoren eines Industrieroboters eingesetzten Applikationsvorrichtungen sind regelmäßig hinsichtlich des maximalen Gewichtes limitiert, so dass die eingesetzten mit Klebeelementen beschickten Kleberollen zumeist nur eine limitierte Breite und Länge aufweisen können, wodurch auch die maximale Größe der Klebeelemente limitiert wird.

Eine besondere Problematik der aus dem Stand der Technik bekannten Lösungen, die sich sowohl für externe Bandzuführungen von Klebeelementen als auch für Ausgestaltungen mit integrierten Spenderanordnungen ergibt, besteht darin, dass zur vollständigen Beklebung von Substraten regelmäßig unterschiedliche Arten von Klebeelementen benötigt werden, die sich beispielsweise hinsichtlich der Abmessungen oder der chemischen Natur der eingesetzten Klebemassen unterscheiden. Diese Problematik wird noch dadurch verstärkt, dass die Reihenfolge, in der die unterschiedlichen Typen von Klebeelementen benötigt werden, durch den Arbeitsweg des Endeffektors vorgegeben wird, der zur Minimierung der Wegstrecken und Optimierung der Arbeitseffizienz idealerweise die zu beklebenden Stellen in einer Reihenfolge ansteuern sollte, die durch die kürzesten Abstände bedingt ist und keine unterschiedlichen Bedürfnisse der Klebepositionen berücksichtigen muss. Entsprechend stellt der Bedarf an unterschiedlichen Klebeelementen bei vielen Verfahren des Standes der Technik ein Effizienzhindernis dar. Ein beispielhafte Applikatonsvorrichtung wird in Dokument US 2019/0352034 offenbart.

Eine zufriedenstellende Lösung für dieses Problem wurde im Stand der Technik nach Einschätzung der Erfinder noch nicht gefunden. Zwei oder mehr bandförmige Zuführungen mit unterschiedlichen Klebeelementen zum beweglichen Endeffektor vorzusehen ist insbesondere bei Cobots regelmäßig nicht effizient möglich, da das Gewicht dieser Applikatoren häufig 20 kg oder mehr beträgt. Den Endeffektor mit mehreren integrierten Spenderanordnungen für unterschiedliche Klebeelemente auszurüsten ist insbesondere unter gewichtstechnischen Aspekten zumeist kein gangbarer Weg. Die theoretische Idee, einzelne integrierte oder externe Klebeelementrollen der Spendervorrichtung mit komplexen Klebeelementanordnungen unterschiedlicher Klebeelemente auf dem jeweiligen Liner vorzubereiten, deren Reihenfolge den Anforderungen der anschließend sequenziell angesteuerten Klebepositionen des Substrates entspricht, wäre mit einem erheblichen Fertigungsaufwand verbunden, so dass dies nach Einschätzung der Erfinder kaum praktikabel umsetzbar wäre. Insbesondere würde jede Komplikation, bspw. ein fehlerhaftes oder fehlendes Klebeelement, den kompletten Arbeitsablauf gefährden, insbesondere auch für nachfolgend zu beklebende Substrate.

In der Praxis bleibt dem Fachmann vor diesem Hintergrund in der Serienfertigung bislang zumeist nur die Möglichkeit, unterschiedliche Klebepositionen mit unterschiedlichen Anforderungen an die Klebeelemente nacheinander an unterschiedlichen Arbeitsstationen und/oder mit unterschiedlichen Applikationsvorrichtungen zu bekleben, wodurch der Platzbedarf und der apparative Aufwand erheblich gesteigert wird.

Die primäre Aufgabe der vorliegenden Erfindung war es, die Nachteile des Standes der Technik auszuräumen oder zumindest zu verringern.

Insbesondere war es die Aufgabe der vorliegenden Erfindung, ein leistungsfähiges Applikationssystem zur Applikation von Klebeelementen auf zu beklebende Substrate sowie entsprechende in diesem Applikationssystem einzusetzende Spendervorrichtungen und Applikationsvorrichtungen anzugeben.

Hierbei war es eine Aufgabe der vorliegenden Erfindung, dass das Applikationssystem mit einer hohen Arbeits- und Prozesssicherheit betrieben werden können sollte, wobei insbesondere eine bandförmige Verbindung zwischen der Spendervorrichtung und der Applikationsvorrichtung vermieden werden sollte, welche im Verfahren eingesetzte Arbeitskräfte behindern oder gefährden könnte.

Zudem sollte das anzugebende Applikationssystem möglichst wartungsarm sein und insbesondere die Notwendigkeit für Nachfüllschritte an Klebebandrollen sowie den Austausch von Nachfüllkassetten überflüssig machen, um insoweit auch die anfallende Menge an schlecht wiederzuverwertenden Abfall zu verringern.

Insbesondere war es jedoch eine Aufgabe der vorliegenden Erfindung, dass mit dem anzugebenden Applikationssystem in effizienter Weise unterschiedliche Klebepositionen auf einem Substrat, welche verschiedene Anforderungen an die Klebeelemente stellen, mit den optimalen Klebeelementen beklebt werden können, ohne dass die hierfür von der Applikationsvorrichtung zurückgelegte Wegstrecke und/oder das Gewicht der Applikationsvorrichtung in nachteiliger Weise erhöht werden müssen.

Hierbei war es eine Aufgabe der vorliegenden Erfindung, dass mit dem anzugebenden Applikationssystem ohne wesentliche Änderungen nacheinander eine Vielzahl von Substraten mit klebepositionsoptimierten Klebeelementen beklebt werden können, auch wenn sich die Substrate hinsichtlich der Art, Anzahl oder Position der Klebepositionen erheblich unterscheiden.

Es war eine wünschenswerte Vorgabe, dass das anzugebende Applikationssystem auch mit einem Cobot ausgeführt werden kann, d.h. ein Arbeitsroboter dessen Einsatz in einer Arbeitsstation möglich ist, in der auch Arbeitskräfte am Substrat arbeiten, ohne deren Sicherheit zu gefährden, was insbesondere strenge Vorgaben an das Maximalgewicht der Applikationsvorrichtung stellt.

Zudem war es eine Aufgabe der vorliegenden Erfindung, ein entsprechendes Verfahren zur Applikation von Klebeelementen auf zu beklebende Substrate mit dem anzugebenden Applikationssystem bereitzustellen.

Die Erfinder der vorliegenden Erfindung haben nunmehr gefunden, dass sich die vorstehend beschriebenen Aufgaben lösen lassen, wenn in einem Applikationssystem eine spezifische Spendervorrichtung sowie eine besondere Applikationsvorrichtung eingesetzt werden, die jeweils auf den Einsatz eines umlaufenden Förderbandes mit einer adhäsionsreduzierten Oberfläche setzen, welches auch als Transferband bezeichnet wird, die in dem Applikationssystem in spezifischer Weise zusammenwirken können, wie es in den Ansprüchen definiert ist.

Dieses Konzept basiert darauf, dass eine für das Substrat spezifische, vorbestimmte Anordnung von Klebeelementen in der Spendervorrichtung erzeugt wird, die eine Vielzahl von unterschiedlichen Klebeelementen umfasst, die in einer Reihenfolge angeordnet sind, die mit der Ansteuerung der entsprechenden Klebepositionen am zu beklebenden Substrat durch die Applikationsvorrichtung korrespondiert. Diese auf den Bedarf der anschließenden Klebeelementverspendung optimierte Zusammenstellung unterschiedlicher Klebeelemente, die sich beispielsweise hinsichtlich ihrer Größe und/oder der chemischen Natur der eingesetzten Klebemasse unterscheiden, wird auf die Applikationsvorrichtung übertragen. Hierzu wird die an einer automatisierten Bewegungseinheit angeordnete Applikationsvorrichtung an die Spendervorrichtung herangefahren, sodass eine Übergabe der zuvor zusammengestellten Klebeelementanordnung vom Transferband der Spendervorrichtung auf das Transferband der Applikationsvorrichtung erfolgen kann. Das Transferband der Applikationsvorrichtung ist dabei so bemessen, dass es die gesamte Klebeelementanordnung aufnehmen kann. Nach der entsprechenden Beschickung der Applikationsvorrichtung mit für das Substrat optimierten Klebeelementen kann die Applikationsvorrichtung wieder in den Applikationsmodus versetzt werden, in dem die Applikationsvorrichtung durch die Bewegungseinheit die zu beklebenden Klebepositionen des Substrates ansteuert. An der ersten Klebeposition nimmt die Applikationsvorrichtung ein erstes Klebeelement der Klebeelementanordnung auf und appliziert dieses am Substrat. Anschließend wird auf dem umlaufenden Förderband der Applikationsvorrichtung das nächste Klebeelement der Klebeelementanordnung aus dem Reservoir an Klebeelementen in den Applikationsbereich verfahren, in dem es wiederum von dem Applikationselement an der nächsten Klebeposition des Substrats aufgenommen und appliziert werden kann. Somit können die Klebeelemente der Klebeelementanordnung, welche sozusagen auf dem Transferband der Applikationsvorrichtung zwischengelagert werden, Stück für Stück an das Substrat appliziert werden, wobei die Applikationsvorrichtung in vorteilhafter Weise eine wegstreckenoptimierte Ansteuerung der Klebepositionen vornehmen kann, da die Verfügbarkeit der Klebeelemente im Applikationsbereich auf die individuellen Anforderungen der Klebeposition abgestimmt ist.

In vorteilhafter Weise kann in einem entsprechenden Applikationssystem auf den Einsatz von bandförmigen Zuführverbindungen zwischen der Spendervorrichtung und der Applikationsvorrichtung, welche sich zwischen diesen Vorrichtungen aufspannen, ebenso verzichtet werden, wie auf den Einsatz von integrierten Spendervorrichtung im End-Effektor. Hierdurch ist es in vorteilhafter Weise möglich, die Applikationsvorrichtung besonders leicht auszuführen und die anfallende Menge an Abfall zu minimieren, insbesondere wenn in der Spendervorrichtung wiederverwertbare Nachfüllkassetten eigesetzt werden. Zudem ist das entsprechende Applikationssystem sehr robust und fehlerunanfällig, wobei es in effizienter Weise möglich ist, auch völlig unterschiedliche Substrate, welche sich hinsichtlich der Zahl und/oder Art und/oder Position der Klebeposition unterscheiden, optimal zu bekleben, da durch die Spendervorrichtung problemlos eine veränderte und substratoptimierte Sequenz von Klebeelementen bereitgestellt und an die Applikationsvorrichtung übertragen werden kann. Da die Spendervorrichtung in vorteilhafter Weise stationär ausgeführt werden kann und somit vergleichsweise geringen Anforderungen hinsichtlich des Gewichtes und der Ausmaße unterliegt, können in der Spendervorrichtung Spendereinheiten für eine große Zahl von unterschiedlichen Klebeelementen vorgesehen werden, ohne dass dies zu Effizienzeinbußen führt, sodass beispielsweise auch Klebeelemente "on demand" bereitgestellt werden können, welche nur selten benötigt werden und die in herkömmlichen Fertigungsstraßen zumeist eine händische Applikation erfordern würden, wenn eine separate automatisierte Spendervorrichtung für diese Klebeelemente durch den geringen Bedarf nicht gerechtfertigt ist. Zusammenfassend wird durch ein entsprechendes Applikationssystem somit insbesondere eine verbesserte Klebeelementvarianz bei gleichzeitig hoher Applikationsgeschwindigkeit der einzelnen Klebeelemente sowie infolgedessen eine vorteilhafte Zeit- und Kosteneffizienz erreicht.

Die vorstehend genannten Aufgaben werden somit durch den Gegenstand der Erfindung gelöst, wie er in den Ansprüchen definiert ist. Bevorzugte erfindungsgemäße Ausgestaltungen ergeben sich aus den Unteransprüchen und den nachfolgenden Ausführungen.

Solche Ausführungsformen, die nachfolgend als bevorzugt bezeichnet sind, werden in besonders bevorzugten Ausführungsformen mit Merkmalen anderer als bevorzugt bezeichneter Ausführungsformen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal einer Ausführungsform mit einem oder mehreren weiteren Merkmalen anderer Ausführungsformen kombiniert wird, die in irgendeinem Ausmaß als bevorzugt bezeichnet werden. Merkmale bevorzugter Applikationsvorrichtungen, Spendervorrichtungen und Verfahren ergeben sich aus den Merkmalen bevorzugter Applikationssysteme.

Die Erfindung betrifft ein Applikationssystem zur Applikation einer Vielzahl von Klebeelementen auf zu beklebende Substrate, umfassend:
a) eine Spendervorrichtung, umfassend:
   a1) zwei oder mehr Spendereinheiten, umfassend jeweils eine Vielzahl von Klebeelementen oder zumindest einen Klebeelementvorläufer, aus dem die Spendervorrichtung eine Vielzahl von Klebeelementen herstellen kann, wobei die Spendereinheiten dazu eingerichtet sind, Klebeelemente auszugeben,
   a2) ein Klebeelementführungssystem, und
   a3) eine Transfereinheit, umfassend ein umlaufendes Förderband mit einer adhäsionsreduzierten Oberfläche und einer Spendekante,
   wobei die Spendervorrichtung dazu eingerichtet ist, aus den Spendereinheiten ausgegebene Klebeelemente mit dem Klebeelementführungssystem auf das Förderband der Transfereinheit zu überführen, und hierbei auf der adhäsionsreduzierten Oberfläche eine Klebeelementanordnung aus einer Vielzahl von Klebeelementen zu erzeugen, wobei die Klebeelementanordnung Klebeelemente von unterschiedlichen Spendereinheiten umfasst,
      und
b) eine von der Spendervorrichtung beabstandete und an einer automatisierten Bewegungseinheit angeordnete Applikationsvorrichtung, umfassend:
   b1) ein Förderelement, umfassend ein umlaufendes Förderband mit einer adhäsionsreduzierten Oberfläche, das sich durch einen Aufnahmebereich, einen Entnahmebereich und einen Reservoirbereich erstreckt, und
   b2) ein Applikationselement,
   wobei die Applikationsvorrichtung dazu eingerichtet ist, dass eine Vielzahl von im Aufnahmebereich auf die adhäsionsreduzierte Oberfläche aufgebrachten Klebeelementen mit dem Förderelement in den Reservoirbereich gefördert werden können und dass ein im Reservoirbereich befindliches Klebeelement mit dem Förderelement in den Entnahmebereich gefördert werden kann,
   wobei die Applikationsvorrichtung dazu eingerichtet ist, ein in dem Entnahmebereich auf dem Förderband des Förderelements angeordnetes Klebeelement mit dem Applikationselement aufzunehmen und auf ein zu beklebendes Substrat zu applizieren,
   wobei das Applikationssystem dazu eingerichtet ist, dass die Applikationsvorrichtung mit der automatisierten Bewegungseinheit relativ zur Spendervorrichtung in eine Transferstellung bewegt werden kann, in der das Applikationssystem dazu eingerichtet ist, dass die Klebeelemente der Klebeelementanordnung von der Transfereinheit über die Spendekante auf das Förderelement überführt und im Aufnahmebereich auf die adhäsionsreduzierte Oberfläche des Förderelements aufgebracht werden können, sodass zumindest ein Teil der überführten Klebeelemente mit dem Förderelement in den Reservoirbereich gefördert wird, und
   wobei das Applikationssystem dazu eingerichtet ist, nach der Überführung der Klebeelemente der Klebeelementanordnung auf das Förderelement in einem Applikationsmodus Klebeelemente aus dem Reservoirbereich in den Entnahmebereich zu fördern, die Klebeelemente mit dem Applikationselement aufzunehmen und auf ein zu beklebendes Substrat zu applizieren.

Das erfindungsgemäße Applikationssystem dient der Applikation von Klebeelementen an zu beklebende Substrate, beispielsweise Fahrzeugkomponenten, wie Dachhimmel. Das Applikationssystem umfasst dabei eine Spendervorrichtung und eine von der Spendervorrichtung beabstandete Applikationsvorrichtung, welche an einer automatisierten Bewegungseinheit angeordnet ist, wobei diese beiden Vorrichtungen miteinander wechselwirken, um die vorteilhafte Funktionalität des erfindungsgemäßen Applikationssystems zu ermöglichen.

Es kann als Vorteil des erfindungsgemäßen Applikationssystems gesehen werden, dass dieses besonders leicht und effizient zu automatisieren ist. Der Fachmann versteht insoweit, dass hierfür zumeist eine elektronische Datenverarbeitungsvorrichtung eingesetzt werden wird, um die Steuerung des Applikationssystems bzw. des Verfahrens zu bedingen oder zu befördern. Für die meisten Einsatzzwecke relevant ist entsprechend ein erfindungsgemäßes Applikationssystem, wobei das Applikationssystem eine elektronische Datenverarbeitungsvorrichtung zur Steuerung des Applikationssystems umfasst.

Für im Wesentlichen alle Ausführungsformen relevant ist ein erfindungsgemäßes Applikationssystem, wobei die automatisierte Bewegungseinheit ein Roboterarm ist. Von besonderer Praxisrelevanz ist ein erfindungsgemäßes Applikationssystem, wobei die Applikationsvorrichtung in einer Arbeitsstation einer Fertigungsstraße angeordnet ist und/oder wobei die Spendervorrichtung außerhalb einer Arbeitsstation einer Fertigungsstraße angeordnet ist.

Gerade für größere Fertigungsstraßen relevant ist ein erfindungsgemäßes Applikationssystem, wobei das Applikationssystem zwei oder mehr Applikationsvorrichtungen und/oder Spendervorrichtungen umfasst, wobei vorteilhafterweise mehrere Applikationsvorrichtungen gleichzeitig von einer Spendervorrichtung beschickt werden können.

Die Spendervorrichtung dient im erfindungsgemäßen Applikationssystem dazu, die für das zu beklebende Substrat spezifische Klebeelementanordnung, d.h. die Sequenz aus unterschiedlichen Klebeelementen zu erzeugen, die im erfindungsgemäßen Verfahren auf die Applikationsvorrichtung transferiert und vor dort verspendet werden können.

Zur Ermöglichung dieser Funktionalität umfasst die Spendervorrichtung zunächst zwei oder mehr Spendereinheiten. Diese Spendereinheiten dienen der Bereitstellung von Klebeelementen, welche sich beispielsweise hinsichtlich ihrer Abmessungen oder der chemischen Natur der jeweiligen Klebemasse unterscheiden können. Umso höher die Zahl der Spendereinheiten, umso höher ist die Flexibilität hinsichtlich der mit dem Applikationssystem applizierbaren Klebeelemente. Bevorzugt ist entsprechend ein erfindungsgemäßes Applikationssystem, wobei die Spendervorrichtung drei oder mehr, bevorzugt vier oder mehr, besonders bevorzugt fünf oder mehr, Spendereinheiten umfasst.

Es kann als Vorteil des erfindungsgemäßen Applikationssystems gesehen werden, dass dieses hinsichtlich der einzusetzenden Klebeelemente eine große Flexibilität aufweist. Prinzipiell ist es somit möglich, mit dem Applikationssystem eine große Vielzahl an unterschiedlichen Klebeelementen zu verspenden, beispielsweise auch Klebestreifen, Klebefolien oder Ähnliches. Angesichts der hohen industriellen Relevanz ist es jedoch besonders bevorzugt, das Applikationssystem für die Applikation sogenannter Stanzlinge auszulegen. Bevorzugt ist demgemäß ein erfindungsgemäßes Applikationssystem, wobei die Klebeelemente Stanzlinge sind.

In Übereinstimmung mit dem fachmännischen Verständnis ist den Klebeelementen zumeist gemein, dass sie über eine Klebeschicht und eine Trägerschicht verfügen. Unter den Klebeelementen sind dabei mit Blick auf die Praxisanforderungen insbesondere haftklebrige Klebeelemente relevant. Für im Wesentlichen alle Ausführungsformen relevant ist ein erfindungsgemäßes Applikationssystem, wobei die Klebeelemente eine Trägerschicht und einer damit verbundenen Klebeschicht umfassen. Zweckmäßig ist dabei ein erfindungsgemäßes Applikationssystem, wobei die von der Klebeschicht abgewandte Seite der Klebeelemente durch die Trägerschicht gebildet wird. Besonders bevorzugt ist dabei ein erfindungsgemäßes Applikationssystem, wobei die Klebeelemente Haftklebeelemente sind, und/oder wobei die Klebeschicht eine Haftklebemasse umfasst, wobei die Klebeschicht bevorzugt aus einer Haftklebemasse besteht.

Für die Klebeschichten kommen prinzipiell alle branchenüblichen Klebemassen in Frage, beispielsweise Klebemassen auf der Basis von Synthesekautschuken oder Poly(meth)acrylaten. Hinsichtlich der Trägerschicht beispielhaft ist ein erfindungsgemäßes Applikationssystem, wobei die Trägerschicht ein oder mehrere Materialien umfasst, die ausgewählt sind aus der Gruppe bestehend aus Polyethylen, Polypropylen, cyclische Olefin Copolymeren, Polyvinylchlorid, Polyester, Ethylenvinylalkohol, Polyvinylidenchlorid, Polyvinylidenfluorid, Polyacrylnitril, Polycarbonat, Polyamid, Polyethersulfon und Polyimid, bevorzugt ausgewählt ist aus der Gruppe bestehend aus Polyethylen, Polypropylen und Polyethylenterephthalat, wobei die Trägerschicht bevorzugt aus diesen Materialien besteht.

Auch wenn es zumindest theoretisch denkbar ist, mit dem erfindungsgemäßen Applikationssystem lediglich identische Klebeelemente zu applizieren, versteht der Fachmann, dass sich die Vorteile des erfindungsgemäßen Applikationssystems und des darauf aufbauenden Verfahrens gerade dann ergeben, wenn unterschiedliche Klebeelemente appliziert werden sollen, die sich hinsichtlich ihrer Eigenschaften unterscheiden und auf die Erfordernisse der jeweils zu beklebenden Klebeposition am Substrat hin optimiert sind. Bevorzugt ist entsprechend ein erfindungsgemäßes Applikationssystem, wobei die Klebeelemente unterschiedlicher Spendereinheiten sich hinsichtlich einer oder mehrerer Eigenschaften unterscheiden, die Ausgewählt sind aus der Gruppe bestehend aus der chemischen Zusammensetzung der Klebeschicht, dem Trägermaterial der Trägerschicht, der Form der Klebeelemente und den Abmessungen der Klebeelemente, bevorzugt den Abmessungen der Klebeelemente.

In der Spendervorrichtung können die Klebeelemente zweckmäßigerweise als vorab vereinzelte Klebeelemente auf einer Klebebandrolle bereitgestellt werden, wobei sie beispielsweise mit der Klebeschicht auf einem adhäsionsreduzierten Liner angeordnet sein können, von welchem sie beim Ausgeben aus der Spendereinheit getrennt werden. Neben dem Einsatz von bereits vereinzelten Klebeelementen ist es jedoch auch denkbar, dass die Herstellung der später zu applizierenden Klebeelemente erst in der Spendervorrichtung erfolgt, welche entsprechend hierzu eingerichtet ist, was bei stationären Spendervorrichtungen beispielsweise durch Schneideinheiten mit öligen Messern oder Laserstrahlern auch mit vergleichsweise aufwändigen und/oder wartungsintensiven Methoden realisieren lässt. In diesem Fall umfasst die Spendervorrichtung einen sogenannten Klebeelementvorläufer. In Übereinstimmung mit dem fachmännischen Verständnis handelt es sich bei einem solchen Klebeelementvorläufer um ein Halbzeug, aus dem die Klebeelemente hergestellt werden können. Besonders relevante Beispiele sind hierbei wiederum Kleberolle von durchgehenden Klebebändern, aus denen Klebeelemente durch Vereinzelung verhalten werden können, um beispielsweise durch das Abtrennen und/oder Heraustrennen, beispielsweise das Abschneiden oder Herausstanzen, von Klebeelementen die entsprechenden zu applizierenden Klebeelemente zu erhalten. Bevorzugt ist ein erfindungsgemäßes Applikationssystem, wobei die Spendereinheiten die Klebeelemente auf einer Klebebandrolle umfassten und/oder die Spendereinheiten als Klebeelementvorläufer Klebebandrolle sowie eine Schneidvorrichtung umfassen. Besonders bevorzugt ist ein erfindungsgemäßes Applikationssystem, wobei die Spendereinheiten jeweils eine Vielzahl von Klebeelementen umfassen, bevorzugt auf einer Klebebandrolle.

In Übereinstimmung mit dem fachmännischen Verständnis können die zwei oder mehr Spendereinheiten teilweise miteinander verbunden oder in anderer Weise miteinander konstruktiv verknüpft sein. Beispielsweise können zwei Klebebandrollen mit Klebeelementen als erste und zweite Spendereinheit mit der gleichen Antriebs- und/oder Steuereinheit verbunden und/oder gemeinsam in einem Gehäuse angeordnet sein. Entsprechend können mehrere Spendereinheiten der Spendervorrichtung, beispielsweise in der Form von Klebbandrollen mit Klebeelementen und zugehörigem Führungssystem, Bestandteil eine größeren Spenderstruktur sein.

In einer bevorzugten Ausführungsform sind die Spendereinheiten selbst als Ganzes reversibel und zerstörungsfrei lösbar in der Spendervorrichtung angeordnet. Hierbei ist insbesondere eine Ausgestaltung bevorzugt, bei der die Spendereinheiten als Nachfüllkassetten ausgeführt sind, welche reversibel und zerstörungsfrei lösbar in dafür vorgesehene Kassettenaufnahmen der Spendervorrichtung eingesetzt werden können. Bevorzugt ist hierfür ein erfindungsgemäßes Applikationssystem, wobei die Spendereinheiten reversibel und zerstörungsfrei lösbar in der Spendervorrichtung angeordnet sind.

Wie vorstehend erläutert, dienen die Spendereinheiten jeweils dazu, in dem Verfahren die in ihnen bereitgestellten Klebeelemente an das nachgelagerte System auszugeben. Dies kann beispielsweise dadurch ermöglicht werden, dass die Spendereinheiten über einen Spendebereich verfügen, in dem die Klebeelemente von außen zugänglich sind, sodass sie von einem Überführungselement, beispielsweise einem Sauggreifer, aufgenommen werden können. Da der Einsatz entsprechender Überführungselemente im Sinne eines "Pick & Place", welches auch nachfolgend mit Blick auf das Klebeelementführungssystem umfassender beschrieben wird, als vergleichsweise aufwändig empfunden wird, ist es nach Einschätzung der Erfinder bevorzugt, die Spendereinheiten vielmehr mit einer Spendekante auszurüsten, die zuweilen auch als Messerkante bezeichnet wird. Das Konzept einer Spendekante ist dem Fachmann im Bereich der Klebtechnik dabei gut vertraut. Spendekanten dienen der Abtrennung von Klebelementen von einem unterliegenden bahnförmigen Trennmaterial mit adhäsionsreduzierter Oberfläche, beispielsweise einem Liner. Das Materialband mit dem bahnförmigen Trennmaterial und den darauf angeordneten Klebeelementen wird auf die Spendekante zugeführt, wobei das bahnförmige Trennmaterial am Ende der Spendekante, welche zumeist einen sehr kleinen Krümmungsradius aufweist, scharf um diese Spendekante herumgeführt wird. Infolge der inhärenten Steifigkeit des Klebeelementes, die größer ist als die Adhäsion an dem bahnförmigen Trennmaterial, kann das Klebeelement dieser Bewegung des Trennmaterials nicht folgen und wird vielmehr sukzessive vom Trennmaterial abgelöst, umso weiter das Materialband über die Spendekante geführt wird. Das Klebeelement schiebt sich somit unter Ablösung vom bahnförmigen Trennmaterial über die Spendekante hinaus und kann beispielweise an eine an die Spendekante anschließende Trägerstruktur, beispielsweise ein Förderband, übergeben werden. Bevorzugt ist somit ein erfindungsgemäßes Applikationssystem, wobei die Spendereinheiten eine Spendekante, bevorzugt eine ortsfeste Spendekante, aufweisen und dazu eingerichtet sind, die Klebeelemente an der Spendekante auszugeben und auf das Klebeelementführungssystem zu überführen. Ob es sich bei einem konstruktiven Führungselement um eine Spendekante handelt, ist im Sinne einer funktionalen Beschreibung abhängig davon, ob die entsprechenden Klebeelemente an diesem Führungselement von einem unterliegenden bahnförmigen Trennmaterial separiert werden können. In der Praxis stimmt der Fachmann die konstruktive Ausgestaltung, d.h. beispielsweise dem Krümmungsradius an der Kante, insbesondere auf die Adhäsion der Klebeelemente an dem bahnförmigen Trennmaterial und die Steifigkeit der Klebeelemente ab.

Neben den Spendereinheiten umfasst die Spendervorrichtung eine sogenannte Transfereinheit, welche ein umlaufendes Förderband mit einer adhäsionsreduzierten Oberfläche und einer Spendekante umfasst. Diese Transfereinheit dient dazu, dass auf ihr die spezifische Sequenz an Klebeelementen, d.h. die Klebeelementanordnung aus einer Vielzahl von Klebeelementen, erzeugt wird. Zudem dient die Transfereinheit dazu, die in der Transfereinheit zusammengestellte Klebeelementanordnung auf die Applikationsvorrichtung zu transferieren. Für die Realisierung der Transferfunktionalität umfasst die Transfereinheit ein umlaufendes Förderband, welches eine adhäsionsreduzierte Oberfläche und eine Spendekante aufweist. Die Kombination aus einer adhäsionsreduzierten Oberfläche, die ein zu starkes Festkleben der Klebeelemente auf der Transfereinheit verhindert, im Zusammenspiel mit der Spendekante ermöglicht es, die auf der Transfereinheit angeordneten Klebeelemente der Klebeelementanordnung an der Spendekante wieder von der adhäsionsreduzierten Oberfläche zu separieren, sodass sich die Klebeelemente über die Spendekante hinweg bewegen und an das nachfolgend weiter beschriebene Förderelement der Applikationsvorrichtung übergeben werden können, wenn dieses in der Transferstellung beispielsweise fluchtend zu dem umlaufenden Förderband der Transfereinheit angeordnet wird. Entsprechende umlaufende Förderbänder werden von den Erfindern auch als Transferbänder bezeichnet.

Eine adhäsionsreduzierte Oberfläche ist in Übereinstimmung mit dem fachmännischen Verständnis so ausgestaltet, dass die Klebeelemente, bzw. deren Klebeschichten, zu der Oberfläche eine verringerte bzw. insgesamt niedrige Adhäsion zeigen. Eine entsprechende Ausgestaltung ist dabei für den Fachmann im Wissen um die Erfindung zwanglos umzusetzen, da dieser das Konzept der adhäsionsverringerten Oberflächen aus vielen anderen Bereichen der Klebetechnik kennt, wo es beispielsweise im Zusammenhang mit typischen Linern regelmäßig eingesetzt wird. In der Praxis ist es schwierig, absolute Werte für die wirkenden Kräfte und das notwendige Maß der Adhäsionsreduktion anzugeben. Die zwischen den Klebeelementen und der adhäsionsreduzierten Oberfläche des Förderelements tolerierbaren Adhäsionskräfte hängen im Wesentlichen von den physikalisch-chemischen Eigenschaften der eingesetzten Klebemasse, insbesondere deren Kohäsion, sowie der Ausgestaltung der Spendekante ab, welche die bei der Ablösung wirkenden Kräfte bestimmt. In der Praxis wird die Auswahl der in der Klebeschicht der Klebeelementen eingesetzten Klebemasse in dem meisten Fällen von den Anwendungsanforderungen abhängen, die an die Verbundfestigkeit zu dem zu beklebenden Substrat oder andere Anwendungserfordernisse gestellt werden. Der Fachmann, der eine für die Wechselwirkung zu dem Substrat geeignete Klebemasse identifiziert hat, kann anschließend für das Material des Förderelementes bzw. für dessen Beschichtung eine passende Auswahl treffen, zu der die jeweilige Klebemassen eine hinreichend geringe Adhäsion zeigt, dass die Klebeelemente an der Spendekante von der adhäsionsreduzierten Oberfläche ohne kohäsives Versagen separiert werden können. Mit anderen Worten handelt es sich um ein erfindungsgemäßes Applikationssystem, wobei die adhäsionsreduzierte Oberfläche so ausgelegt ist, dass die Adhäsion zwischen den Klebeelementen und der adhäsionsreduzierten Oberfläche kleiner ist als die Kohäsion der Klebemasse der Klebeschicht und/oder kleiner ist als die beim Ausgeben an der Spendekante wirkenden Abzugskräfte zwischen den Klebeelementen und der adhäsionsreduzierten Oberfläche, bevorzugt um 30 % oder mehr, bevorzugt um 60 % oder mehr, besonders bevorzugt um 90 % oder mehr. Die Erfinder schlagen insoweit vor, dass das Ausmaß der Adhäsion des Klebeelements zu der adhäsionsreduzierten Oberfläche zweckmäßigerweise zusätzlich oder alternativ auch in Relation zu der Adhäsion des Klebeelementes an dem zu beklebenden Substrat angegeben werden kann, da diese Wechselwirkungen zielführenderweise deutlich größer sein sollte als die Adhäsion des Klebeelements zu dem Förderelement. Bevorzugt ist demgemäß ein erfindungsgemäßes Applikationssystem, wobei die adhäsionsreduzierte Oberfläche so ausgelegt ist, dass die Adhäsion des Klebeelementes zu der adhäsionsreduzierten Oberfläche kleiner ist, bevorzugt um 80 % oder mehr, besonders bevorzugt um 90 % oder mehr, ganz besonders bevorzugt um 95 % oder mehr, als die Adhäsion des Klebeelementes am zu beklebenden Substrat.

Zumindest grundsätzlich ist es möglich, die Oberfläche des Förderbandes dadurch adhäsionsreduziert auszubilden, dass die gesamte Auflage des Förderbandes aus einem Material gefertigt wird, zu dem die spezifischen Klebeelemente eine verringerte Adhäsion zeigen. Analog zu der bei typischen Linern verwendeten Technologie ist es jedoch bevorzugt, die gewünschte Adhäsionsreduktion durch die Beschichtung der Oberfläche des Förderbandes mit einer sogenannten Releaseschicht zu realisieren, welche besonders bevorzugt eine Silikon basierte Releaseschicht sein kann. Bevorzugt ist entsprechend ein erfindungsgemäßes Applikationssystem, wobei die adhäsionsreduzierte Oberfläche mit einer Releaseschicht beschichtet ist, bevorzugt mit einer Silikon-Releaseschicht, wobei die Silikon-Releaseschicht bevorzugt herstellbar ist durch Vernetzung eines vernetzbaren Silikonsystems umfassend ein oder mehrere Polysiloxane.

Auch wenn es zumindest theoretisch möglich ist, das Förderband der Transfereinheit in der Spendervorrichtung beweglich auszuführen, beispielsweise um es der zu beschickenden Applikationsvorrichtung entgegenfahren zu können, ist dies mit Blick auf die konstruktive Ausgestaltung der Spendervorrichtung nicht bevorzugt. Bevorzugt ist vielmehr ein erfindungsgemäßes Applikationssystem, wobei das Förderband der Transfereinheit in der Spendervorrichtung positionsfest angeordnet ist.

Da eine Bewegung des Förderbandes der Transfereinheit ohnehin nicht bevorzugt ist und zudem wenig Gründe dafür sprechen, in der Transfereinheit eine komplexe Führung der Klebeelemente vorzusehen, bei der die Adhäsion der Klebeelemente an der adhäsionsreduzierten Oberfläche größer sein müsste als die Schwerkraft, um ein Herabfallen der Klebeelemente zu vermeiden, kann das umlaufende Förderband in der Spendervorrichtung in vorteilhafter Weise konstruktiv sehr einfach ausgestaltet werden. Eine Ausgestaltung nach Art eines Saugriemens, wie sie nachfolgend für das umlaufende Förderelement der Applikationsvorrichtung beschrieben wird, ist somit zwar möglich, in der weit überwiegenden Zahl der Fälle jedoch nicht notwendig.

Der Fachmann versteht, dass die in der Transfereinheit erzeugte Klebeelementanordnung eine Vielzahl von Klebeelementen umfasst, welche zweckmäßigerweise in einer mehr oder weniger geraden Reihe angeordnet werden und in den meisten Fällen zumindest geringfügig voneinander beabstandet sein werden, um ein ungewolltes Verkleben zwischen den Klebeelementen zu verhindern.

Die unterschiedlichen Klebeelemente der Spendereinheiten sollen im erfindungsgemäßen Verfahren auf das umlaufende Förderband der Transfereinheit überführt und dabei in eine spezifische Anordnung gebracht werden. Um dies zu ermöglichen, umfasst die Spendervorrichtung dazu eingerichtete Mittel, die vorliegend als Klebeelementführungssystem bezeichnet werden. Der Ausdruck "Klebeelementführungssystem" abstrahiert dabei die diversen dem Fachmann bekannten Möglichkeiten, um die von Spendereinheiten ausgegebenen Klebeelemente in einer spezifischen Anordnung auf der Transfereinheit anzuordnen. In einer ersten Ausgestaltung kann das Klebeelementführungssystem beispielsweise Überführungselemente umfassen, beispielsweise bewegliche Sauggreifer, die analog zu dem Konzept des "Pick & Place" die Klebeelemente von den Spendereinheiten aufnehmen und sie in vorgesehenen Plätzen auf dem umlaufenden Förderband der Transfereinheit anordnen, um die Klebeelementanordnung zu erzeugen. In diesem Fall handelt es sich um ein erfindungsgemäßes Applikationssystem, wobei das Klebeelementführungssystem ein oder mehrere Überführungselemente umfasst, wobei die Überführungselemente dazu eingerichtet sind, von den Spendereinheiten ausgegebene Klebeelemente unter Ausbildung einer reversibel und zerstörungsfrei lösbaren Verbindung aufzunehmen und diese auf die adhäsionsreduzierte Oberfläche der Transfereinheit zu positionieren, wobei das Klebeelementführungssystem bevorzugt zwei oder mehr, besonders bevorzugt vier oder mehr, ganz besonders bevorzugt für jede Spendereinheit ein separates, Überführungselement umfasst.

Auch wenn das Erzeugen einer vorgegebenen Klebeelementanordnung aus unterschiedlichen Klebeelementen verschiedener Spendereinheiten mit einem entsprechenden auf Überführungselementen basierenden Klebeelementführungssystem möglich ist, wird ein entsprechender Aufbau nach Einschätzung der Erfinder jedoch mit einem relativ hohen apparativen Aufwand verbunden sein. Entsprechend schlagen die Erfinder vor, dass in einer besonders bevorzugten Ausführungsform auf Spendereinheiten mit Spendekanten zurückgegriffen werden kann, die so angeordnet werden, dass sie ihre Klebeelemente auf ein umlaufendes Förderband des Klebeelementführungssystems übergeben, auf dem die Klebeelemente in Richtung der Transfereinheit geführt werden. In vorteilhafter Weise kann die gewünschte Klebeelementanordnung dadurch erzeugt werden, dass die Klebeelemente sequenziell, d.h. nacheinander, auf das Förderband des Klebeelementführungssystems übergeben und damit zur Transfereinheit geführt werden, sodass sie in der gewünschten Reihenfolge bei der Transfereinheit ankommen. Bevorzugt ist entsprechend ein erfindungsgemäßes Applikationssystem, wobei das Klebeelementführungssystem zumindest ein umlaufendes Förderband mit einer adhäsionsreduzierten Oberfläche umfasst. Besonders bevorzugt ist ein erfindungsgemäßes Applikationssystem, wobei das umlaufende Förderband des Klebeelementführungssystems so angeordnet ist, dass die Spendereinheiten die von ihnen über eine Spendekante ausgegebenen Klebeelemente direkt auf das umlaufende Förderband des Klebeelementführungssystems überführen können.

Für die Übergabe der Klebeelemente von einem entsprechenden umlaufenden Förderband eines Klebeelementführungssystems auf das umlaufende Förderband der Transfereinheit kommt zumindest theoretisch wiederum der Einsatz von Überführungselementen, beispielsweise mit Saugfunktion, infrage, wobei dies wiederum mit einem relativ hohen apparativen Aufwand verbunden ist. Analog zu den vorstehenden Ausführungen ist es wiederum bevorzugt, die Übergabe über eine Spendekante zu realisieren, wobei die vorstehenden Ausführungen zur Spendekante und zur adhäsionsreduzierten Oberfläche entsprechend zutreffen. Bevorzugt ist ein erfindungsgemäßes Applikationssystem, wobei die Transfereinheit ein oder mehrere Überführungselemente umfasst, wobei die Überführungselemente dazu eingerichtet sind, auf dem umlaufenden Förderband des Klebeelementführungssystems geführte Klebeelemente unter Ausbildung einer reversibel und zerstörungsfrei lösbaren Verbindung aufzunehmen und diese auf die adhäsionsreduzierte Oberfläche des Förderbandes der Transfereinheit zu positionieren. Besonders bevorzugt ist ein erfindungsgemäßes Applikationssystem, wobei das umlaufende Förderband des Klebeelementführungssystems im Übergangsbereich zur Transfereinheit eine Spendekante umfasst, wobei das umlaufende Förderband des Klebeelementführungssystems so angeordnet ist, dass die auf dem Förderband geförderten Klebeelemente über die Spendekante direkt auf das umlaufende Förderband der Transfereinheit überführt werden können.

Neben der Spendervorrichtung, welche die substratspezifische Klebeelementanordnung erzeugen kann, umfasst das erfindungsgemäße Applikationssystem auch eine Applikationsvorrichtung, welche im erfindungsgemäßen Verfahren die tatsächliche Beklebung des Substrates vornimmt. Erfindungsgemäß ist die Applikationsvorrichtung von der Spendervorrichtung beabstandet, d.h. es handelt sich insbesondere nicht um ein Applikationssystem, bei dem die Spendervorrichtung in die Applikationsvorrichtung integriert ist. Die Applikationsvorrichtung ist an einer automatisierten Bewegungseinheit angeordnet, insbesondere einem Roboterarm, und dadurch selbst im Raum beweglich. Bei der entsprechenden Applikationsvorrichtung handelt es sich somit um einen Endeffektor, welcher beispielsweise an einem Industrieroboter angeordnet ist. In Übereinstimmung mit dem fachmännischen Verständnis ist ein Endeffektor das ausführende und/oder abschließende Element von automatisierten Bewegungseinheiten, beispielsweise Roboterarmen. In anderen Worten sind Endeffektoren im Bereich der Robotik die letzte Komponenten einer kinematischen Kette, die zumeist dazu eingerichtet sind, eine durch eine externe Steuervorrichtung vorgegebene Ausführungsvorschrift auszuführen, gegebenenfalls gemeinsam mit der automatisierten Bewegungseinheit, an der sie befestigt sind.

Diese Applikationsvorrichtung umfasst als einen zentralen Bestandteil ein Förderelement, welches wiederum ein umlaufendes Förderband mit einer adhäsionsreduzierten Oberfläche umfasst oder aus diesem besteht. Dieses Förderelement dient mit dem umlaufenden Förderband dazu, die von der Transfereinheit bereitgestellte Klebeelementanordnung in einer Transferstellung von der Spendervorrichtung zu übernehmen und trägt die Vielzahl an Klebeelementen der Klebeelementanordnung während des Einsatzes der Applikationsvorrichtung im Applikationsmodus, wobei dem umlaufenden Förderband auch die Aufgabe zukommt, die Klebeelemente nacheinander in den Einflussbereich des Applikationselements zu bringen, sodass das Applikationselement die Klebeelemente nacheinander von dem umlaufenden Förderband abheben und an das Substrat applizieren kann. Bevorzugt ist hierfür ein erfindungsgemäßes Applikationssystem, wobei das Förderband in der Applikationsvorrichtung positionsfest angeordnet ist.

Um die Verständlichkeit der vorliegenden Erfindung zu fördern und eine klare Definition zu ermöglichen, wird im Rahmen der Erfindung definiert, dass sich das umlaufende Förderband durch zumindest drei verschiedene Bereiche erstreckt. Diese verschiedenen Bereiche werden über ihre Rolle unterschieden, die sie im Betrieb des Applikationssystems spielen, und dementsprechend als Aufnahmebereich, Entnahmebereich und Reservoirbereich bezeichnet. Diese Unterscheidung der Bereiche dient der funktionalen Beschreibung der Erfindung, wobei in vorteilhafter Weise keine scharfe Unterscheidung der Bereiche notwendig ist, und einzelne Bereiche beispielsweise auch mehrfach vorliegen können, beispielsweise mehrere Entnahmebereiche im Falle von mehreren Applikationselementen.

Der Aufnahmebereich ist der Teil des umlaufenden Förderbandes, in dem die über die Spendekante der Transfereinheit geführten Klebeelemente in der Transferstellung auf die adhäsionsreduzierte Oberfläche des Förderelements aufgesetzt werden. Der Fachmann versteht insoweit, dass beispielsweise bei einer gleichlaufenden Umlaufgeschwindigkeit zwischen des Förderbändern des Förderelements und Transfereinheit die Klebeelementanordnung Stück für Stück auf das Förderband des Förderelements überführt wird, ohne dass der Abstand zwischen den Klebeelementen sich verändert. Um die Aufnahme eines weiteren Klebeelementes im Aufnahmebereich zu ermöglichen, wird das zuvor auf der Oberfläche angeordnete Klebeelement dabei mit dem Förderband des Förderelements weiterbefördert.

Nach Übernahme sämtlicher Klebeelemente von der Transfereinheit liegen - bis auf gegebenenfalls eins - sämtliche Klebeelemente außerhalb des Aufnahmebereiches vor. Der Bereich außerhalb des Aufnahmebereiches, in dem die Klebeelemente während des anschließenden Applikationsprozesses liegen und darauf warten, dem Applikationselement zugeführt zu werden, wird vorliegend als Reservoirbereich bezeichnet, weil er sozusagen das Reservoir darstellt, aus dem während des Applikationsvorgangs die in der spezifischen Sequenz angeordneten Klebeelemente vorgehalten werden. Neben dem Aufnahmebereich und dem Reservoirbereich wird der Entnahmebereich definiert, womit der Teil des umlaufenden Förderbandes bezeichnet wird, in dem das Applikationselement die zu applizierenden Klebeelemente aufnimmt, um sie anschließend an das Substrat zu kleben. In einer beispielhaften Ausgestaltung schließt sich der Entnahmebereich in Umlaufrichtung des Förderbandes an den Aufnahmebereich an, wohingegen der Reservoirbereich in Umlaufrichtung hinter dem Entnahmebereich liegt. In diesem Fall handelt es sich um ein erfindungsgemäßes Applikationssystem, wobei der Entnahmebereich zwischen dem Aufnahmebereich und dem Reservoirbereich angeordnet ist. In einer solchen Ausgestaltung werden die von der Transfereinheit übernommenen Klebeelemente somit im Aufnahmebereich Stück für Stück auf die Oberfläche des Förderbandes platziert und durch den Entnahmebereich hindurch in den Reservoirbereich geführt, um sozusagen das Reservoir mit Klebeelementen zu füllen.

Der Fachmann versteht, dass das Förderelement für die Klebeelemente eine Art Zwischenspeicher während des Applikationsprozesses darstellt. Entsprechend kommt der Länge des Förderelements eine besondere Bedeutung zu, da dies in Abhängigkeit von den Abmessungen der Klebeelemente bestimmt, wie viele Klebeelemente die Applikationsvorrichtung aufnehmen kann, bevor sie erneut beschickt werden muss. Bevorzugt ist insoweit ein erfindungsgemäßes Applikationssystem, wobei das Förderband des Förderelements eine Länge der Umlauffläche im Bereich von 50 bis 2000 cm, bevorzugt im Bereich von 100 bis 1000 cm, besonders bevorzugt im Bereich von 150 bis 500 cm, aufweist. Bevorzugt ist zusätzlich oder alternativ ein erfindungsgemäßes Applikationssystem, wobei das Förderband des Förderelements bezogen länger ist als das Förderband der Transfereinheit.

Es ist zweckmäßig, das Förderband so auszulegen, dass eine gewisse Mindestzahl von Klebeelementen darauf zwischengelagert werden kann. Entsprechend ist es zweckmäßig, die Länge des Förderbandes bzw. der zur Verfügung stehenden Auflagefläche in Umlaufrichtung relativ zu den Klebeelementen anzugeben. Dies hat jedoch den Nachteil, dass hierbei ein konstruktives Merkmal des Applikationssystems über eine Verbrauchskomponente definiert werden muss. Da in vorteilhafter Weise aber die Breite des eingesetzten Förderbandes aus Gewichtsgründen zumeist sehr nah an dem größten Durchmesser der Klebeelemente liegt, kann eine zweckmäßige Größenrelation auch in Bezug auf die Breite des Förderbandes definiert werden. Bevorzugt ist ein erfindungsgemäßes Applikationssystem, wobei das Förderband des Förderelements eine Länge der Umlauffläche im Bereich von 10*d bis 100*d, bevorzugt im Bereich von 15*d bis 80*d, besonders bevorzugt im Bereich von 20*d bis 60*d, ganz besonders bevorzugt im Bereich von 25*d bis 40*d, aufweist, wobei d der größte Durchmesser der verschiedenen Typen an Klebeelementen der Spendereinheiten ist. Bevorzugt ist zusätzlich oder alternativ ein erfindungsgemäßes Applikationssystem, wobei das Förderband des Förderelements eine Länge der Umlauffläche im Bereich von 10*b bis 100*b, bevorzugt im Bereich von 15*b bis 80*b, besonders bevorzugt im Bereich von 20*b bis 60*b, ganz besonders bevorzugt im Bereich von 25*b bis 40*b, aufweist, wobei b die Breite des Förderbandes des Förderelements orthogonal zur Umlaufrichtung ist.

Hinsichtlich der Umsetzung der adhäsionsreduzierten Oberfläche gelten für das umlaufende Förderband des Förderelements die vorstehend schon für das Förderband der Transfereinheit definierten Grundsätze, insbesondere hinsichtlich der Ausgestaltung mit einer Releaseschicht. Da die auf dem Förderband des Förderelements befindlichen Klebeelemente jedoch nicht über eine Spendekante ausgegeben werden, sondern vom Applikationselement von der adhäsionsreduzierten Oberfläche abgezogen werden müssen, ist es zweckmäßig, das Ausmaß der Adhäsionsreduktion relativ zu der von dem Applikationselement beim Aufnehmen aufbringbaren Verbindungsstärke anzugeben, da diese deutlich größer sein sollte als die Adhäsion des Klebeelements an der adhäsionsreduzierten Oberfläche, um ein Aufnehmen zu ermöglichen. Bevorzugt ist ein erfindungsgemäßes Applikationssystem, wobei die adhäsionsreduzierte Oberfläche mit einer Releaseschicht beschichtet ist, bevorzugt mit einer Silikon-Releaseschicht, wobei die Silikon-Releaseschicht bevorzugt herstellbar ist durch Vernetzung eines vernetzbaren Silikonsystems umfassend ein oder mehrere Polysiloxane. Bevorzugt ist zusätzlich oder alternativ ein erfindungsgemäßes Applikationssystem, wobei die adhäsionsreduzierte Oberfläche so ausgelegt ist, dass die Adhäsion der zu applizierenden Klebeelemente zu der adhäsionsreduzierten Oberfläche kleiner ist, bevorzugt um 50 % oder mehr, besonders bevorzugt um 70 % oder mehr, ganz besonders bevorzugt um 90 % oder mehr, als die Verbindungsstärke zwischen dem Applikationselement und dem Klebeelement beim Aufnehmen des Klebeelementes mit dem Applikationselement. Funktional definiert ist zusätzlich oder alternativ ein erfindungsgemäßes Applikationssystem bevorzugt, wobei die adhäsionsreduzierte Oberfläche so ausgelegt ist, dass die Adhäsion zwischen den Klebeelementen und der adhäsionsreduzierten Oberfläche kleiner ist als die Kohäsion der Klebemasse der Klebeschicht und/oder kleiner ist als die beim Aufnehmen der Klebeelemente wirkenden Abzugskräfte zwischen den Klebeelementen und der adhäsionsreduzierten Oberfläche, bevorzugt um 30 % oder mehr, bevorzugt um 60 % oder mehr, besonders bevorzugt um 90 % oder mehr.

Anders als beim Förderband der Transfereinheit ist es für das Förderband in der Applikationsvorrichtung explizit bevorzugt, dieses mit einer Ansaugfunktion auszuführen. In einer entsprechenden Ausgestaltung sind auf der Oberfläche des Förderelements durchgehende Ausnehmungen vorgesehen, durch die ein im Inneren des Förderbandes wirkender Unterdruck eine zusätzliche Anpresskraft der Klebeelemente an das Förderband gewährleistet. Hierdurch wird ein festerer Sitz der Klebeelemente auf der adhäsionsreduzierten Oberfläche sichergestellt, sodass diese beim Verfahren der Applikationsvorrichtung auch dann nicht verrutschen oder abfallen, wenn die Klebeelemente über Kopf angeordnet sind und die Schwerkraft entsprechend einwirkt. Als besonderer Vorteil dieser Ausgestaltung kann dabei insbesondere angesehen werden, dass damit auch die in vertikaler Richtung untere Seite des umlaufenden Förderbandes als zusätzlicher Bereitstellungsraum für die Klebeelemente der Klebeelementanordnung zugänglich wird, wodurch bei einer reduzierten absoluten Länge des Förderbandes ein größerer als Reservoirbereich nutzbarer Teil der Umlauffläche zur Verfügung steht. Eine entsprechende Ansaugfunktion und die Ausgestaltung als Saugriemen sind für den Fachmann dabei aus dem Stand der Technik bekannt und durch den Einsatz von Pumpe zu realisieren, wobei die Erfinder vorschlagen, im Entnahmebereich gegebenenfalls Blockierelemente vorzusehen, die durch ihren Strömungsschatten eine verringerte Ansaugwirkung in dem Bereich bewirken, in dem das Applikationselement die Klebeelemente aufnimmt. Besonders bevorzugt ist somit ein erfindungsgemäßes Applikationssystem, wobei das Förderband des Förderelements eine Ansaugfunktion zur Fixierung der Klebeelemente auf der Oberfläche des umlaufenden Förderelements umfasst.

Um eine besonders zuverlässige, reproduzierbare und genaue Applikation der Klebeelemente zu ermöglichen, ist es wünschenswert, dass diese vom Applikationselement reproduzierbar aufgenommen werden können. Hierfür ist es zweckmäßig, dass die Klebeelemente im Moment der Aufnahme im Entnahmebereich stets gleich angeordnet sind. Zu diesem Zweck schlagen die Erfinder den Einsatz von Stopperelementen vor, welche oberhalb des Förderbandes angeordnet werden können, um eine Feinjustierung der Positionierung zu ermöglichen. Bevorzugt ist in dieser Ausgestaltung ein erfindungsgemäßes Applikationssystem, wobei die Applikationsvorrichtung ein Stopperelement umfasst, wobei das Stopperelement dazu eingerichtet ist, die Position von auf dem Förderband des Förderelements angeordneten Klebeelementen in Förderrichtung des zu fixieren, so dass die Klebeelemente bei Bewegung des Förderelements relativ zu der adhäsionsreduzierten Oberfläche bewegt werden, wobei das Stopperelement bevorzugt dazu eingerichtet ist, die Position von auf dem Förderband des Förderelements angeordneten Klebeelementen quer zur Förderrichtung zu verändern.

Sofern sich angesichts der konstruktiven Ausgestaltung bezogen auf die Umlaufrichtung der Reservoirbereich zwischen dem Aufnahmebereich und dem Entnahmebereich befindet, kann die Zuführung der Klebeelemente aus dem Reservoirbereich in den Entnahmebereich mit dem gleichen Umlaufsinn erfolgen, mit dem auch die Übernahme der Klebeelemente von der Transfereinheit ermöglicht wird. Dies gilt auch für Ausgestaltungen, in denen der Entnahmebereich in Umlaufrichtung zwischen dem Aufnahmebereich und dem Reservoirbereich angeordnet ist, sofern es möglich ist, beispielsweise durch eine Saugfunktion des Förderbandes, die Klebeelemente um das gesamte Förderelement herum aus dem Reservoirbereich wieder in den Entnahmebereich zu verfahren. Insbesondere wenn keine Saugfunktion vorgesehen wird, ist es in dieser Ausgestaltung jedoch bevorzugt, die Applikationsvorrichtung so auszulegen, dass die Umlaufrichtung des Förderbandes bei Bedarf invertiert werden kann. Bevorzugt ist entsprechend ein erfindungsgemäßes Applikationssystem, wobei die Applikationsvorrichtung dazu eingerichtet ist, dass die Förderrichtung des Förderbandes des Förderelements invertiert werden kann.

Wie vorstehend erläutert, kann es als großer Vorteil des erfindungsgemäßen Applikationssystems gesehen werden, dass dieses nicht auf den Einsatz von Aufnahmen für Klebebandrollen oder Nachfüllkassetten im Endeffektor angewiesen ist. Insbesondere hierdurch können die entsprechenden Applikationsvorrichtungen besonders leicht ausgeführt werden. Der Fachmann versteht insoweit, dass er zur Ausnutzung dieser Vorteile auch bevorzugt ist, eine entsprechende leichte und/oder einfache Ausgestaltung der Applikationsvorrichtung zu realisieren. Bevorzugt ist demgemäß ein erfindungsgemäßes Applikationssystem, wobei die Applikationsvorrichtung keine Aufnahme für Klebebandrollen umfasst und/oder wobei die Applikationsvorrichtung keine Aufnahme für Nachfüllkassetten umfasst. Bevorzugt ist zusätzlich oder alternativ ein erfindungsgemäßes Applikationssystem, wobei die Applikationsvorrichtung ein Gesamtgewicht im Bereich von 1 bis 40 kg, bevorzugt im Bereich von 2 bis 30 kg, besonders bevorzugt im Bereich von 4 bis 20 kg aufweist.

Es kann als Vorteil des erfindungsgemäßen Applikationssystems gesehen werden, dass dieses hinsichtlich der Ausgestaltung des Applikationselements, d.h. des Bestandteils, der für die finale Anbringung am Substrat verantwortlich ist, sofern dieses ein Klebeelement von dem Förderelement aufnehmen kann. Insbesondere für die Applikation von Klebestreifen sind insoweit beispielsweise Applikationsrollen denkbar, welche über eine Ansaugfunktion eine reversibel und zerstörungsfrei lösbare Verbindung mit einem auf dem Förderband angeordneten Klebestreifen, beziehungsweise dessen Trägerschicht, ausbilden können, um diesen anschließend durch Rotation auf das Substrat auszurichten und dort anzurollen. Nach Einschätzung der Erfinder sind jedoch ganz besonders solche Systeme bevorzugt, die für das Applikationselement wiederum auf ein "Pick & Place"-Konzept zurückgreifen.

Mit Blick auf die praktische Umsetzung der Applikationsfunktionalität wird in der weit überwiegenden Zahl der Fälle eine Anforderung darin bestehen, dass das Applikationselement dazu eingerichtet sein sollte, mit einem Klebeelement, bzw. dessen Trägerschicht, eine reversibel und zerstörungsfrei lösbare Verbindung ausbilden zu können. Hierfür kann der Fachmann prinzipiell auf verschiedene aus dem Stand der Technik bekannte Lösungen zurückgreifen.

Der Fachmann versteht, dass die vorstehend beschriebene Einrichtung des Applikationselements mit einem Klebeelement eine reversibel und zerstörungsfrei lösbare Verbindung ausbilden zu können, nicht erfordert, dass die Auflösung der Verbindung durch den Wegfall der verbindenden Kraft erfolgen muss, wie es beispielsweise beim Ausschalten eines Magnetfeldes im Falle einer magnetischen Verbindung oder durch das Abstellen einer Saugfunktion erreichbar wäre. Vielmehr ist es auch möglich und in der Praxis sogar häufig besonders effizient, wenn die reversible und zerstörungsfreie Lösung gegen die wirkenden Kräfte erfolgt, die die Verbindung bedingen. Hierbei kann insbesondere ausgenutzt werden, dass die Adhäsion der Klebeelemente am Substrat in vielen Fällen deutlich größer ist als die die Verbindung mit dem Applikationselement bedingende Kraft, so dass die Verbindung beispielsweise gegen einen ansaugend wirkenden Unterdruck erfolgen kann, wenn das Applikationselement vom Substrat weggeführt wird.

Die reversibel und zerstörungsfrei lösbare Verbindung kann zumindest in der Theorie beispielsweise durch eine Magnetanordnung vermittelt werden, die beispielsweise mit einer magnetischen Trägerschicht der Klebeelemente wechselwirkt, oder theoretisch auch über Saugnäpfe oder eine Haftklebemasse vermittelt werden. Besonders bevorzugt ist wegen der hohe Zuverlässigkeit, der einfachen konstruktiven Umsetzung und der Langlebigkeit einer solchen Lösung jedoch der Einsatz einer unterdruckbasierten Ansauglösung.

Besonders bevorzugt ist nach Einschätzung der Erfinder ein Applikationselement, welches eine Kolbenanordnung mit zumindest einem an einem verfahrbaren Kolben angeordneten Sauggreifer umfasst, da mit diesen Applikationselementen eine besonders präzise und effiziente Applikation der Klebeelemente möglich ist. In diesem Fall wird das Applikationselement auf das Förderelement ausgerichtet und der steuerbare Sauggreifer mit dem verfahrbaren Kolben auf das im Entnahmebereich auf das Förderband des Förderelements herabgesenkt, um das darauf befindliche Klebeelement an der Trägerschicht mit dem Sauggreifer zu kontaktieren und reversibel und zerstörungsfrei eine Verbindung herzustellen. Durch erneutes Verfahren des Kolbens kann das Klebeelement von dem Förderelement abgehoben und mittels der Bewegungseinheit in Richtung des Substrates ausgerichtet werden, bevor eine Applikationsbewegung erfolgt, die die Klebeschicht mit dem Substrat kontaktiert, so dass die Verbindung zwischen dem Klebeelement und dem Applikationselement aufgelöst werden kann. Bevorzugt ist entsprechend ein erfindungsgemäßes Applikationssystem, wobei das Applikationselement eine Bewegungseinheit und eine an der Bewegungseinheit angeordnete Aufnahmeeinheit umfasst, wobei die Aufnahmeeinheit dazu eingerichtet ist, mit der Trägerschicht der Klebeelemente eine reversibel und zerstörungsfrei lösbare Verbindung auszubilden. Besonders bevorzugt ist insoweit ein erfindungsgemäßes Applikationssystem, wobei die Aufnahmeeinheit einen oder mehrere steuerbare Sauggreifer umfasst, wobei die Applikationsvorrichtung bevorzugt eine oder mehrere mit den Sauggreifern verbundene Vakuumpumpen umfasst. Bevorzugt ist zusätzlich oder alternativ ein erfindungsgemäßes Applikationssystem, wobei die Bewegungseinheit eine Kolbenanordnung mit einem Zylinder und einem in dem Zylinder verfahrbaren Kolben umfasst, wobei die Bewegungseinheit bevorzugt eine Rotationsvorrichtung zur Rotation der Kolbenanordnung umfasst, wobei die Rotationsachse bevorzugt im Wesentlichen parallel zu der Oberfläche des Förderelements der Fördereinheit verläuft.

In besonders bevorzugten Ausgestaltungen kann das Applikationselement als rotierbares Applikationselement ausgeführt werden, welches auf beiden Seiten einen entsprechenden verfahrbaren Kolben nebst Sauggreifer umfasst. So kann das Applikationselement nach Aufnahme eines ersten Klebeelements um eine Rotationsachse rotiert werden, um das aufgenommene Klebeelement in Richtung eines Substrates auszurichten, an das dieses durch Verfahren des Kolbens angedrückt werden kann. In der Zwischenzeit ist auf der Rückseite des Applikationselements ein weiterer verfahrbarer Kolben mit einem entsprechenden Sauggreifer bereit, ein weiteres Klebeelement für die nächste Applikation aufzunehmen.

In einer bevorzugten Ausführungsform wird dabei durch die unterschiedliche Dimensionierung der Sauggreifer an den verschiedenen Enden der Bewegungseinheit eine effiziente Applikation von Klebeelementen unterschiedlicher geometrischer Form und/oder unterschiedlicher Abmessungen ermöglicht. Wenn in der Klebeelementanordnung beispielsweise zwei Arten von Klebeelementen mit sehr unterschiedlichen Abmessungen, z.B. kleine und große Klebeelemente, bereitgestellt werden sollen, kann in dieser Ausführungsform eine Applikation der unterschiedlich dimensionierten Klebeelemente dadurch erfolgen, dass die Aufnahmefläche der zwei Sauggreifer korrespondierend zu den zwei verschiedenen Durchmessern der Klebeelemente gewählt wird. Dadurch wird ein erfindungsgemäßes Applikationssystem erhalten, mit welchem eine präzise Applikation unterschiedlich dimensionierter Klebeelemente besonders effizient ermöglicht wird, ohne einen Wechsel des Applikationselementes zu erfordern. Besonders bevorzugt ist eine erfindungsgemäße Applikationsvorrichtung, wobei das Applikationselement zwei oder mehr Aufnahmeeinheiten umfasst, wobei die Aufnahmeeinheiten bevorzugt unterschiedliche Abmessungen aufweisen. Auf diesem Konzept aufbauend sind auch erfindungsgemäße Applikationsvorrichtung bevorzugt, wobei das Applikationselement 3 oder mehr, bevorzugt 4 oder mehr, besonders bevorzugt 5 oder mehr, Aufnahmeeinheiten umfasst, wobei die Aufnahmeeinheiten bevorzugt unterschiedliche Abmessungen aufweisen. Zusätzlich oder alternativ ist es jedoch auch möglich, zwei oder mehrere Applikationselemente vorzusehen, welche wiederum auf die optimale Applikation von ein oder mehreren Klebelementen ausgelegt sind, und diese Klebeelementspezifisch zum Einsatz zu bringen.

Das Aufnehmen von Klebeelementen mit dem Applikationselement kann in Übereinstimmung mit dem fachmännischen Verständnis durch eine Relativbewegung zwischen dem Applikationselement und dem Förderelement erfolgen, wobei die Relativbewegung beispielsweise auch dadurch erreicht werden kann, dass nach der Kontaktierung des Klebeelementes durch das Applikationselement das Förderelement wegbewegt wird, so dass das Klebeelement am Applikationselement verbleibt. Auf diese Weise ist beispielsweise auch ein nicht-rotierbarer Sauggreifer als Applikationselement umsetzbar. Dieser kann beispielsweise mit der Kolbenanordnung auf das Klebelement herabgesenkt werden, um den Kontakt herzustellen. Anschließend wird das Förderelement unter dem nicht-rotierbaren Sauggreifer weggezogen, woraufhin der nicht-rotierbare Sauggreifer weiter aus der Kolbenanordnung herausgefahren wird, um dadurch am weggezogenen Förderelement vorbei eine Applikationsbewegung auszuführen.

Eine nicht beanspruchte Ausführungsform betrifft im Lichte der vorstehenden Ausführungen eine Spendervorrichtung für den Einsatz in einem erfindungsgemäßen Applikationssystem, umfassend:
a1) zwei oder mehr Spendereinheiten, umfassend jeweils eine Vielzahl von Klebeelementen, wobei die Spendereinheiten dazu eingerichtet sind, Klebeelemente auszugeben,
a2) ein Klebeelementführungssystem, und
a3) eine Transfereinheit, umfassend ein umlaufendes Förderband mit einer adhäsionsreduzierten Oberfläche und einer Spendekante,
wobei die Spendervorrichtung dazu eingerichtet ist, aus den Spendereinheiten ausgegebene Klebeelemente mit dem Klebeelementführungssystem auf das Förderband der Transfereinheit zu überführen, und hierbei auf der adhäsionsreduzierten Oberfläche eine Klebeelementanordnung aus einer Vielzahl von Klebeelementen zu erzeugen, wobei die Klebeelementanordnung Klebeelemente von unterschiedlichen Spendereinheiten umfasst.

Eine nicht beanspruchte Ausführungsform betrifft entsprechend auch eine Applikationsvorrichtung für den Einsatz in einem erfindungsgemäßen Applikationssystem, umfassend:
b1) ein Förderelement, umfassend ein umlaufendes Förderband mit einer adhäsionsreduzierten Oberfläche, das sich durch einen Aufnahmebereich, einen Entnahmebereich und einen Reservoirbereich erstreckt,
b2) ein Applikationselement, und
b3) eine Befestigungseinheit zur Befestigung der Applikationsvorrichtung an einer automatisierten Bewegungseinheit,
wobei die Applikationsvorrichtung dazu eingerichtet ist, dass eine Vielzahl von im Aufnahmebereich auf die adhäsionsreduzierte Oberfläche aufgebrachten Klebeelementen mit dem Förderelement in den Reservoirbereich gefördert werden können und dass ein im Reservoirbereich befindliches Klebeelement mit dem Förderelement in den Entnahmebereich gefördert werden kann,
wobei die Applikationsvorrichtung dazu eingerichtet ist, ein in dem Entnahmebereich auf dem Förderband des Förderelements angeordnetes Klebeelement mit dem Applikationselement aufzunehmen und auf ein zu beklebendes Substrat zu applizieren.

Die Erfindung betrifft darüber hinaus ein Verfahren zur Applikation von Klebeelementen auf zu beklebende Substrate mit einem erfindungsgemäßen Applikationssystem, umfassend die Verfahrensschritte:
i) Erzeugen einer Klebeelementanordnung auf dem Förderband der Transfereinheit der Applikationsvorrichtung, umfassend eine Vielzahl von Klebeelementen, wobei die Klebeelementanordnung Klebeelemente aus unterschiedlichen Spendereinheiten umfasst,
ii) Bewegen der Applikationsvorrichtung in die Transferstellung und Überführen der Klebeelementanordnung von dem Förderband der Transfereinheit auf das Förderband des Förderelements, wobei zumindest ein Teil der überführten Klebeelemente mit dem Förderband in den Reservoirbereich gefördert wird,
iii) Fördern eines Klebeelements aus dem Reservoirbereich in den Entnahmebereich mit dem Förderband des Förderelements,
iv) Aufnehmen des Klebeelements mit dem Applikationselement im Entnahmebereich unter Ausbildung einer reversibel und zerstörungsfrei lösbaren Verbindung zwischen dem Applikationselement und dem Klebeelement, und
v) Applizieren des aufgenommenen Klebeelements an ein zu beklebendes Substrat und Auflösen der Verbindung zwischen dem Applikationselement und dem applizierten Klebeelement,
wobei die Verfahrensschritte iii), iv) und v) wiederholt werden, um eine Vielzahl an Klebeelementen, bevorzugt sämtliche Klebeelemente, der überführten Klebeelementanordnung zu applizieren, und wobei die Verfahrensschritte i) und ii) wiederholt werden, nachdem eine Vielzahl an Klebeelementen, bevorzugt sämtliche Klebeelemente, der zuvor überführten Klebeelementanordnung appliziert wurden.

Exemplarisch ist dabei ein erfindungsgemäßes Verfahren, wobei das umlaufende Förderband der Spendervorrichtung und das umlaufende Förderband des Förderelements in der Transferstellung fluchten, so dass die Klebeelemente der Klebeelementanordnung von dem Förderband der Transfereinheit über die Spendekante auf das Förderband des Förderelements überführt werden können. Beispielhaft ist ein erfindungsgemäßes Verfahren, wobei abgesehen von einem Klebeelement sämtliche, bevorzugt sämtliche, Klebeelemente mit dem Förderelement in den Reservoirbereich gefördert werden.

Bevorzugt ist ein erfindungsgemäßes Verfahren, wobei das zu beklebende Substrat ein Fahrzeugbauteil ist, und/oder wobei das zu beklebende Substrat eine Ausnehmung umfasst, wobei das Klebeelement appliziert wird, um die die Ausnehmung zumindest teilweise, bevorzugt im Wesentlichen vollständig, zu verschließen, bevorzugt fluiddicht zu verschließen.

Bevorzugt ist in einer Ausführungsform ein erfindungsgemäßes Verfahren, wobei mit einer in Verfahrensschritt ii) überführten Klebeelementanordnung zwei oder mehr unterschiedliche Substrate beklebt werden.

Bevorzugt ist alternativ ein erfindungsgemäßes Verfahren, wobei die in Verfahrensschritt ii) überführte Klebeelementanordnung eine Anzahl von Klebeelementen umfasst, die der Zahl der am Substrat zu beklebenden Positionen entspricht. Besonders bevorzugt ist dabei ein erfindungsgemäßes Verfahren, wobei das zu beklebende Substrat eine Vielzahl an unterschiedlichen zu beklebenden Klebepositionen mit unterschiedlichen Klebeanforderungen umfasst, wobei die in Verfahrensschritt ii) überführte Klebeelementanordnung unterschiedliche Klebeelemente umfasst, die auf die unterschiedlichen Klebeanforderungen der Klebepositionen abgestimmt sind.

Bevorzugt ist zusätzlich oder alternativ zu den vorstehend offenbarten Ausführungsformen ein erfindungsgemäßes Verfahren, wobei die in Verfahrensschritt ii) überführte Klebeelementanordnung Klebeelemente aus unterschiedlichen Spendereinheiten umfasst, wobei die Reihenfolge der Klebeelemente auf dem Förderelement auf den Arbeitsplan der Applikationsvorrichtung abgestimmt ist, so dass die Eigenschaften des n-ten Klebeelementes auf dem Förderelement mit den Klebeanforderungen der n-ten von der Applikationsvorrichtung angesteuerten Klebeposition korreliert.

Nachfolgend werden bevorzugte Ausführungsformen der Erfindung unter Bezugnahme auf die beiliegenden Figuren näher erläutert und beschrieben. Dabei zeigen:
- Fig. 1: eine schematische Darstellung eines bevorzugten erfindungsgemäßen Applikationssystems bei der Durchführung des erfindungsgemäßen Verfahrens zu einem ersten Zeitpunkt;
- Fig. 2: eine schematische Darstellung eines bevorzugten erfindungsgemäßen Applikationssystems bei der Durchführung des erfindungsgemäßen Verfahrens zu einem zweiten Zeitpunkt;
- Fig. 3: eine schematische Seitenansicht auf Teile eines bevorzugten erfindungsgemäßen Applikationssystems in der Transferstellung bei der Durchführung des erfindungsgemäßen Verfahrens zu einem dritten Zeitpunkt;
- Fig. 4: eine schematische Darstellung einer bevorzugten erfindungsgemäßen Applikationsvorrichtung in einer ersten Perspektive; und
- Fig. 5: eine schematische Darstellung der bevorzugten erfindungsgemäßen Applikationsvorrichtung der Fig. 4 in einer zweiten Perspektive.

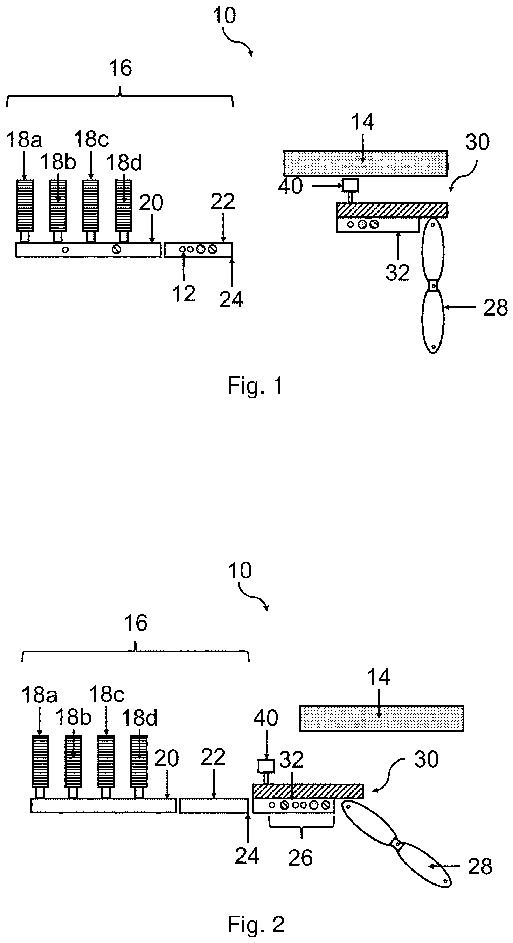

Fig. 1 zeigt eine schematische Darstellung eines bevorzugten erfindungsgemäßen Applikationssystems 10 bei der Durchführung des erfindungsgemäßen Verfahrens zur Applikation einer Vielzahl von Klebeelementen 12 auf ein zu beklebendes Substrat 14 zu einem ersten Zeitpunkt.

Das Applikationssystem 10 umfasst eine Spendervorrichtung 16, mit vier separaten Spendereinheiten 18a, 18b, 18c, 18d, die jeweils als reversibel und zerstörungsfrei austauschbare Nachfüllkassetten ausgeführt sind, welche in entsprechende Aufnahmen der Spendervorrichtung 16 eingesetzt werden können, und die jeweils eine Vielzahl an Klebelementen 12 umfassen, die im Inneren der Nachfüllkassetten in der Form von Klebebandrollen auf einem Liner angeordnet sind. Aus Gründen der Übersichtlichkeit sind die Antriebs- und Steuerungseinheiten der Spendereinheiten 18a-d, welche die in den Aufnahmen der Spendervorrichtung 16 eingesetzten Nachfüllkassetten zur Ausgabe von Klebeelementen 12 veranlassen, nicht eingezeichnet.

Die Klebeelemente 12 sind dabei im gezeigten Beispiel jeweils haftklebrige Stanzlinge und unterscheiden sich zwischen den Spendereinheiten 18a-d hinsichtlich der geometrischen Abmessungen und/oder der eingesetzten Klebemasse, was in Fig. 1 durch unterschiedlich große Kreis bzw. unterschiedliche Musterfüllungen kenntlich gemacht wird, wobei im gezeigten Beispiel nur drei von vier möglichen Klebeelementen 12 in die Klebeelementanordnung 26 eingebracht werden.

Die Spendereinheiten 18a-d sind im gezeigten Beispiel jeweils mit einer Spendereinheiten-Spendekante ausgerüstet und so angeordnet, dass sie die Klebeelemente 12 jeweils direkt an ein als Förderbad ausgeführtes Klebeelementführungssystem 20 übergeben können, an dessen Oberfläche die Klebeelemente 12 in Folge einer Silikonisierung eine verringerte Adhäsion zeigen. Dieses Klebeelementführungssystem 20 transportiert die Klebeelemente 12 in Richtung der Transfereinheit 22, wobei die Klebeelemente über ein Führungssystem-Spendekante an das umlaufende Förderband der Transfereinheit 22 übergeben werden, welches ebenfalls eine durch Silikonisierung adhäsionsreduzierte Oberfläche aufweist.

Um die für die Beklebung des Substrates 14 benötigte optimale Klebeelementanordnung 26 zu erzeugen, wird die Spendervorrichtung 16 durch eine elektronische Datenverarbeitungsvorrichtung (nicht gezeigt) so gesteuert, dass die Klebeelemente 12 nacheinander in der gewünschten Reihenfolge an der Transfereinheit 22 ankommen, was beispielsweise dadurch erfolgen kann, dass die Klebeelemente 12 nacheinander aus den jeweiligen Spendereinheiten 18a-d ausgegeben werden. Auf dem Förderband der Transfereinheit 22 wird aus den nach und nach übernommenen Klebeelementen durch eine auf die Fördergeschwindigkeit des Klebeelementführungssystems 20 abgestimmte Steuerung der schrittweise fortgesetzten Förderbewegung eine Klebeelementanordnung 26 aus mehreren, dicht gepackten und nur geringfügig voneinander beabstandeten Klebeelementen 12 erhalten.

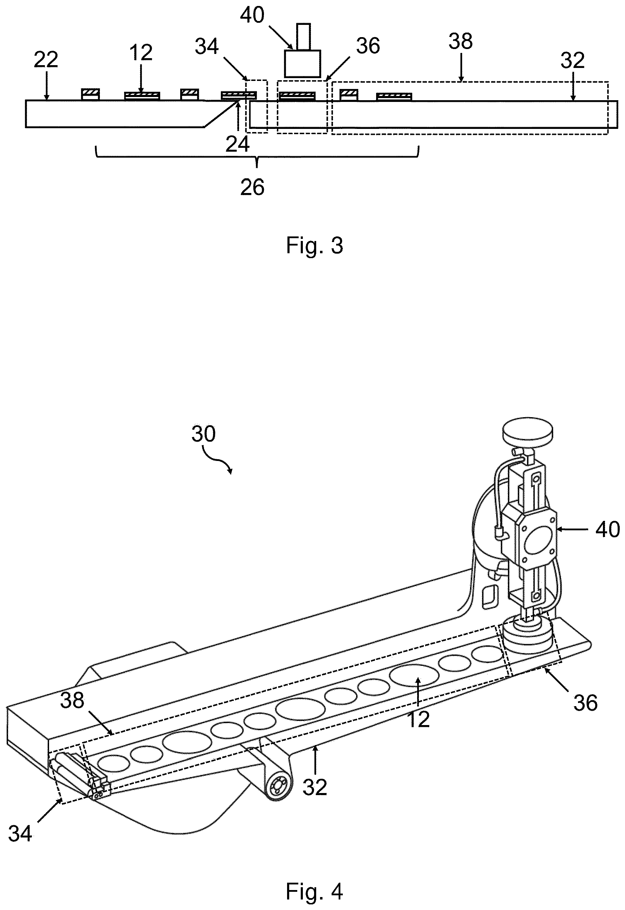

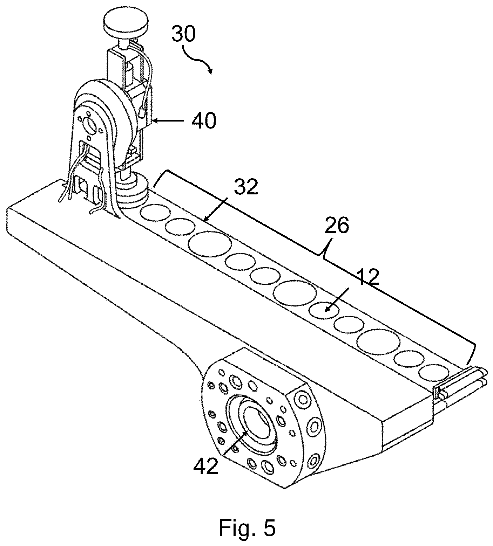

Während die Spendervorrichtung 16 die gewünschte Klebeelementanordnung 26 zusammenstellt, befindet sich das Applikationssystem 10 im gezeigten Beispiel zeitgleich im Applikationsmodus. Hierbei appliziert die Applikationsvorrichtung 30, welche im gezeigten Beispiel der Fig. 1 als End-Effektor eines Industrieroboters ausgeführt ist, der die automatisierten Bewegungseinheit 28 bildet, mit ihrem Applikationselement 40 sukzessive die Klebeelemente, welche auf dem umlaufenden Förderband des Förderelements 32 angeordnet sind, das im gezeigten Beispiel als Saugriemen ausgeführt ist und bei dem die gewünschte Adhäsionsreduktion wiederum durch eine Silikon-Releaseschicht realisiert wird. Dies erfolgt, indem die Applikationsvorrichtung 30 die Klebeelemente 12 nacheinander in den Einflussbereich des Applikationselements 40 befördert, dort aufnimmt und anschließend an das Substrat 14 verspendet. Hierbei ist das Applikationselement 40 aus Gründen der Übersichtlichkeit lediglich mit einer schematischen Repräsentation eingezeichnet, entspricht hinsichtlich Ausführung und Anordnung aber dem in den Fig. 4 und 5 gezeigten Aufbau.

Nachdem die Applikationsvorrichtung 30 die auf dem Förderband des Förderelements 32 vorgehaltenen Klebeelemente 12 verspendet hat, wird die Applikationsvorrichtung 30 durch die automatisierte Bewegungseinheit 28 zu der Spendervorrichtung 16 bewegt, um das Applikationssystem 10 in die Transferstellung zu versetzen. Dies ist in Fig. 2 schematisch visualisiert.

Die Fig. 2 zeigt schematisch das bevorzugten erfindungsgemäße Applikationssystems 10 der Fig. 1, welches nunmehr in die Transferstellung überführt wurde. Hierbei werden die umlaufenden Förderbänder der Transfereinheit 22 und des Förderelements 32 mit ihren Oberflächen fluchtend ausgerichtet, sodass die Klebeelemente 12 über die Spendekante 24 von der Transfereinheit 22 auf das umlaufende Förderband des Förderelements 32 überführt werden können. Die Fig. 2 visualisiert dabei einen Zeitpunkt, nachdem die Applikationsvorrichtung 30 die für die Beklebung des Substrates optimierte Klebeelementanordnung 26, die zuvor auf der Transfereinheit 22 der Spendervorrichtung 16 zusammengestellt wurde, bereits übernommen hat, wobei die Klebeelemente bereits im Wesentlichen in dem Teil der Oberfläche des Förderelements 32 liegen, der im Rahmen der Erfindung als Reservoirbereich 38 bezeichnet wird und sozusagen der Zwischenlagerung der Klebeelemente dient.

Fig. 3 zeigt unabhängig von den Fig. 1 und 2 schematisch in der Seitenansicht den Moment der Übergabe von Klebeelemente 12 einer Klebeelementanordnung 26 zwischen den umlaufenden Förderbänder einer Transfereinheit 22 und eines Förderelements 32. In Fig. 3 ist insbesondere die (schematisch etwas zu spitz dargestellte) Spendekante 24 deutlich zu erkennen, wobei visualisiert wird, wie sich ein Klebeelement 12 in Folge der inhärenten Steifigkeit und des spitzen Abzugwinkels der Unterlage über die Spendekante 24 hinaus schiebt und vom Förderband des Förderelements 32 übernommen werden kann.

In Fig. 3 sind dabei insbesondere auch die drei Bereiche eingetragen, die im Rahmen der vorliegenden Erfindung verwendet werden, um die Funktionalität zu erläutern. Die Übernahme der Klebeelemente 12 erfolgt im Aufnahmebereich 34, womit der Teil des Förderbands des Förderelements 32 bezeichnet wird, in dem die Klebeelemente 12 beim Transferieren aufgesetzt werden. Im Zuge der Übergabe wird das Förderband des Förderelements 32 in die gleiche Förderrichtung bewegt wie das Förderband der Transfereinheit 22, so dass die Klebeelemente 12 durch den Entnahmebereich 36 in den Reservoirbereich 38 befördert werden. Im Entnahmebereich 36 erfolgt später im Applikationsmodus die Aufnahme der Klebeelemente 12 durch das Applikationselement 40, während im Reservoirbereich 38 die Klebeelemente 12 vorgehalten werden, die nach der Verspendung des jeweils vorausgehenden Klebeelements 12 der Klebeelementanordnung 26 in den Entnahmebereich 36 gefördert werden. Bedingt durch die Anordnung des Entnahmebereichs 36 zwischen dem Aufnahmebereich 34 und dem Reservoirbereich 38, erfolgt die Förderung von Klebeelementen 12 aus dem Reservoirbereich 38 entweder durch Invertierung der Förderrichtung oder unter Ausnutzung der Saugfunktionalität dadurch, dass die Klebelemente 12 der Klebeelementanordnung 26 einmal vollständig um das Förderband herumgefördert werden. Der Fachmann versteht insoweit, dass die Krümmungsradien des Förderbandes dafür hinreichend groß gewählt werden, damit keine ungewollten Kanten ausgebildet werden, an denen die Klebeelemente 12 beim Umlaufen abgelöst würden.

Die Fig. 4 und 5 zeigen eine schematische Darstellung einer bevorzugten erfindungsgemäßen Applikationsvorrichtung 30 in zwei verschiedenen perspektivischen Darstellungen. Der Reservoirbereich 38 des ohne Saugfunktion ausgeführten Förderbandes des Förderelements 32 ist dabei vollständig mit Klebeelementen unterschiedlicher Größe belegt, so dass die Fig. 4 und 5 einen Zustand zeigen, wie er insbesondere unmittelbar nach dem Verlassen der Transferstellung vorliegen kann. In Fig. 5 ist dabei auch die Befestigungseinheit 42 zu erkennen, mit der der End-Effektor beispielsweise an einem Roboterarm befestigt werden kann.

Am Aufnahmebereich 34 ist eine unmittelbar über dem Förderband positionierte Andrückrolle vorgesehen, mit welcher die aufgenommenen Klebeelemente 12 kontrolliert an die adhäsionsreduzierte Oberfläche des Förderbandes angerollt werden, um trotz der Adhäsionsreduktion und auch ohne Saugfunktionalität ein Mindestmaß an Haftung und eine fehlerunanfällige Übernahme zu gewährleisten. Die Aufnahme kann jedoch zumindest theoretisch auch von der anderen Seite des Förderbandes der Fördereinheit 32 erfolgen. In Folge der fehlenden Saugfunktion setzt dies jedoch voraus, dass die Förderrichtung des Förderbandes der Fördereinheit 32 invertierbar ist, um die zuvor in den Reservoirbereich 38 beförderten Klebeelemente 12 anschließend wieder in den Entnahmebereich 36 zurück zu verfahren.

In den Fig. 4 und 5 ist besonders gut ein bevorzugtes Applikationselement 40 zu erkennen. Das Applikationselement 40 umfasst im gezeigten Beispiel eine rotierbare Bewegungseinheit, welche beidseitig eine Kolbenanordnung mit einem Zylinder und einem in dem Zylinder verfahrbaren Kolben aufweist, an deren Enden jeweils ein Sauggreifer angeordnet ist, über den reversibel und zerstörungsfrei eine Verbindung zu dem zu applizierenden Klebeelement 12 aufgebaut werden kann.

### Bezugszeichenliste

- 10: Applikationssystem
- 12: Klebeelement
- 14: Substrat
- 16: Spendervorrichtung
- 18a-d: Spendereinheit
- 20: Klebeelementführungssystem
- 22: Transfereinheit
- 24: Spendekante
- 26: Klebeelementanordnung
- 28: Bewegungseinheit
- 30: Applikationsvorrichtung
- 32: Förderelement
- 34: Aufnahmebereich
- 36: Entnahmebereich
- 38: Reservoirbereich
- 40: Applikationselement
- 42: Befestigungseinheit

## Patentansprüche

1. Applikationssystem (10) zur Applikation einer Vielzahl von Klebeelementen (12) auf zu beklebende Substrate (14), umfassend:
a) eine Spendervorrichtung (16), umfassend:
a1) zwei oder mehr Spendereinheiten (18a-d), umfassend jeweils eine Vielzahl von Klebeelementen (12) oder zumindest einen Klebeelementvorläufer, aus dem die Spendervorrichtung (16) eine Vielzahl von Klebeelementen (12) herstellen kann, wobei die Spendereinheiten (18a-d) dazu eingerichtet sind, Klebeelemente (12) auszugeben,
a2) ein Klebeelementführungssystem (20), und
a3) eine Transfereinheit (22), umfassend ein umlaufendes Förderband mit einer adhäsionsreduzierten Oberfläche und einer Spendekante (24),
wobei die Spendervorrichtung (16) dazu eingerichtet ist, aus den Spendereinheiten (18a-d) ausgegebene Klebeelemente (12) mit dem Klebeelementführungssystem (20) auf das Förderband der Transfereinheit (22) zu überführen, und hierbei auf der adhäsionsreduzierten Oberfläche eine Klebeelementanordnung (26) aus einer Vielzahl von Klebeelementen (12) zu erzeugen, wobei die Klebeelementanordnung (26) Klebeelemente (12) von unterschiedlichen Spendereinheiten (18a-d) umfasst,
und
b) eine von der Spendervorrichtung (16) beabstandete und an einer automatisierten Bewegungseinheit (28) angeordnete Applikationsvorrichtung (30), umfassend:
b1) ein Förderelement (32), umfassend ein umlaufendes Förderband mit einer adhäsionsreduzierten Oberfläche, das sich durch einen Aufnahmebereich (34), einen Entnahmebereich (36) und einen Reservoirbereich (38) erstreckt, und
b2) ein Applikationselement (40),
wobei die Applikationsvorrichtung (30) dazu eingerichtet ist, dass eine Vielzahl von im Aufnahmebereich (34) auf die adhäsionsreduzierte Oberfläche aufgebrachten Klebeelementen (12) mit dem Förderelement (32) in den Reservoirbereich (38) gefördert werden können und dass ein im Reservoirbereich (38) befindliches Klebeelement (12) mit dem Förderelement (32) in den Entnahmebereich (36) gefördert werden kann,
wobei die Applikationsvorrichtung (30) dazu eingerichtet ist, ein in dem Entnahmebereich (36) auf dem Förderband des Förderelements (32) angeordnetes Klebeelement (12) mit dem Applikationselement (40) aufzunehmen und auf ein zu beklebendes Substrat (14) zu applizieren,
wobei das Applikationssystem (10) dazu eingerichtet ist, dass die Applikationsvorrichtung (30) mit der automatisierten Bewegungseinheit (28) relativ zur Spendervorrichtung (16) in eine Transferstellung bewegt werden kann, in der das Applikationssystem (10) dazu eingerichtet ist, dass die Klebeelemente (12) der Klebeelementanordnung (26) von der Transfereinheit (22) über die Spendekante (24) auf das Förderelement (32) überführt und
im Aufnahmebereich (34) auf die adhäsionsreduzierte Oberfläche des Förderelements (32) aufgebracht werden können, sodass zumindest ein Teil der überführten Klebeelemente (12) mit dem Förderelement (32) in den Reservoirbereich (38) gefördert wird, und
wobei das Applikationssystem (10) dazu eingerichtet ist, nach der Überführung der Klebeelemente (12) der Klebeelementanordnung (26) auf das Förderelement (32) in einem Applikationsmodus Klebeelemente (12) aus dem Reservoirbereich (38) in den Entnahmebereich (36) zu fördern, die Klebeelemente (12) mit dem Applikationselement (40) aufzunehmen und auf ein zu beklebendes Substrat (14) zu applizieren.

2. Applikationssystem (10) nach Anspruch 1, wobei die adhäsionsreduzierte Oberfläche des Förderbandes der Transfereinheit (22) und des Förderbandes des Förderelements (32) mit einer Releaseschicht beschichtet ist.

3. Applikationssystem (10) nach einem der Ansprüche 1 oder 2, wobei das Förderband des Förderelements (32) eine Länge der Umlauffläche im Bereich von 10*b bis 100*b aufweist, wobei b die Breite des Förderbandes des Förderelements (32) orthogonal zur Umlaufrichtung ist.

4. Applikationssystem (10) nach einem der Ansprüche 1 bis 3, wobei das Förderband des Förderelements (32) eine Ansaugfunktion zur Fixierung der Klebeelemente (12) auf der Oberfläche des umlaufenden Förderelements (32) umfasst.

5. Applikationssystem (10) nach einem der Ansprüche 1 bis 4, wobei die Applikationsvorrichtung (30) dazu eingerichtet ist, dass die Förderrichtung des Förderbandes des Förderelements (32) invertiert werden kann.

6. Applikationssystem (10) nach einem der Ansprüche 1 bis 5, wobei die Spendervorrichtung (16) drei oder mehr Spendereinheiten (18a-d) umfasst.

7. Applikationssystem (10) nach einem der Ansprüche 1 bis 6, wobei die Spendereinheiten (18a-d) reversibel und zerstörungsfrei lösbar in der Spendervorrichtung (16) angeordnet sind.

8. Verfahren zur Applikation von Klebeelementen (12) auf zu beklebende Substrate (14) mit einem Applikationssystem (10) nach einem der Ansprüche 1 bis 7, umfassend die Verfahrensschritte:
i) Erzeugen einer Klebeelementanordnung (26) auf dem Förderband der Transfereinheit (22) der Applikationsvorrichtung (30), umfassend eine Vielzahl von voneinander beabstandeten Klebeelementen (12), wobei die Klebeelementanordnung (26) Klebeelemente (12) aus unterschiedlichen Spendereinheiten (18a-d) umfasst,
ii) Bewegen der Applikationsvorrichtung (30) in die Transferstellung und Überführen der Klebeelementanordnung (26) von dem Förderband der Transfereinheit (22) auf das Förderband des Förderelements (32), wobei zumindest ein Teil der überführten Klebeelemente (12) mit dem Förderband in den Reservoirbereich (38) gefördert wird,
iii) Fördern eines Klebeelements (12) aus dem Reservoirbereich (38) in den Entnahmebereich (36) mit dem Förderband des Förderelements (32),
iv) Aufnehmen des Klebeelements (12) mit dem Applikationselement (40) im Entnahmebereich (36) unter Ausbildung einer reversibel und zerstörungsfrei lösbaren Verbindung zwischen dem Applikationselement (40) und dem Klebeelement (12), und
v) Applizieren des aufgenommenen Klebeelements (12) an ein zu beklebendes Substrat (14) und Auflösen der Verbindung zwischen dem Applikationselement (40) und dem applizierten Klebeelement (12),
wobei die Verfahrensschritte iii), iv) und v) wiederholt werden, um eine Vielzahl an Klebeelementen (12) der überführten Klebeelementanordnung (26) zu applizieren, und wobei die Verfahrensschritte i) und ii) wiederholt werden, nachdem eine Vielzahl an Klebeelementen (12) der zuvor überführten Klebeelementanordnung (26) appliziert wurden.

## Claims

1. Application system (10) for applying a multiplicity of adhesive elements (12) to substrates (14) to be bonded, comprising:
a) a dispenser device (16) comprising:
a1) two or more dispenser units (18a-d), each comprising a multiplicity of adhesive elements (12) or at least one adhesive element precursor from which the dispenser device (16) can produce a multiplicity of adhesive elements (12), wherein the dispenser units (18a-d) are configured to deliver adhesive elements (12), a2) an adhesive element guiding system (20), and
a3) a transfer unit (22) comprising a revolving conveyor belt having a reduced-adhesion surface and a dispensing edge (24),
wherein the dispenser device (16) is configured to transfer adhesive elements (12) delivered from the dispenser units (18a-d) to the conveyor belt of the transfer unit (22) by way of the adhesive element guiding system (20), and to hereby generate on the reduced-adhesion surface an adhesive element arrangement (26) from a multiplicity of adhesive elements (12), wherein the adhesive element arrangement (26) comprises adhesive elements (12) from different dispenser units (18a-d), and
b) an application device (30) which is spaced apart from the dispenser device (16) and is disposed on an automated motion unit (28), comprising:
b1) a conveyor element (32) comprising a revolving conveyor belt having a reduced-adhesion surface, which extends through a receiving region (34), a retrieving region (36) and a reservoir region (38), and
b2) an application element (40),
wherein the application device (30) is configured in such a way that a multiplicity of adhesive elements (12), which have been applied to the reduced-adhesion surface in the receiving region (34), can be conveyed into the reservoir region (38) by way of the conveyor element (32) and that an adhesive element (12) located in the reservoir region (38) can be conveyed into the retrieving region (36) by way of the conveyor element (32),
wherein the application device (30) is configured to receive an adhesive element (12) disposed on the conveyor belt of the conveyor element (32) in the retrieving region (36) by way of the application element (40) and to apply said adhesive element to a substrate (14) to be bonded,
wherein the application system (10) is configured in such a way that the application device (30) can be moved relative to the dispenser device (16) to a transfer position by way of the automated motion unit (28), in which transfer position the application system (10) is configured in such a way that the adhesive elements (12) of the adhesive element arrangement (26) can be transferred over the dispensing edge (24) onto the conveyor element (32) by the transfer unit (22) and in the receiving region (34) be applied to the reduced-adhesion surface of the conveyor element (32) in such a way that at least part of the transferred adhesive elements (12) is conveyed into the reservoir region (38) by way of the conveyor element (32), and
wherein the application system (10) is configured to, after transferring the adhesive elements (12) of the adhesive element arrangement (26) onto the conveyor element (32), in an application mode, convey adhesive elements (12) from the reservoir region (38) into the retrieving region (36), to receive the adhesive elements (12) by way of the application element (40) and to apply said adhesive elements to a substrate (14) to be bonded.

2. Application system (10) according to Claim 1, wherein the reduced-adhesion surface of the conveyor belt of the transfer unit (22) and of the conveyor belt of the conveyor element (32) is coated with a release layer.

3. Application system (10) according to one of Claims 1 or 2, wherein the conveyor belt of the conveyor element (32) has a length of the revolving face in the range of 10*b to 100*b, wherein b is the width of the conveyor belt of the conveyor element (32) orthogonal to the revolving direction.

4. Application system (10) according to one of Claims 1 to 3, wherein the conveyor belt of the conveyor element (32) comprises a suction function for fixing the adhesive elements (12) on the surface of the revolving conveyor element (32).

5. Application system (10) according to one of Claims 1 to 4, wherein the application device (30) is configured in such a way that the conveying direction of the conveyor belt of the conveyor element (32) can be reversed.

6. Application system (10) according to one of Claims 1 to 5, wherein the dispenser device (16) comprises three or more dispenser units (18a-d).

7. Application system (10) according to one of Claims 1 to 6, wherein the dispenser units (18a-d) are disposed so as to be reversibly and non-destructively releasable in the dispenser device (16).

8. Method for applying adhesive elements (12) to substrates (14) to be bonded by an application system (10) according to one of Claims 1 to 7, comprising the following method steps:
i) generating an adhesive element arrangement (26) on the conveyor belt of the transfer unit (22) of the application device (30), comprising a multiplicity of mutually spaced-apart adhesive elements (12), wherein the adhesive element arrangement (26) comprises adhesive elements (12) from different dispenser units (18a-d),
ii) moving the application device (30) to the transfer position and transferring the adhesive element arrangement (26) from the conveyor belt of the transfer unit (22) to the conveyor belt of the conveyor element (32), wherein at least part of the transferred adhesive elements (12) are conveyed by the conveyor belt into the reservoir region (38),
iii) conveying an adhesive element (12) from the reservoir region (38) into the retrieving region (36) with the conveyor belt of the conveyor element (32),
iv) receiving the adhesive element (12) with the application element (40) in the retrieving region (36) while forming a reversibly and non-destructively releasable connection between the application element (40) and the adhesive element (12), and
v) applying the received adhesive element (12) to a substrate (14) to be bonded, and releasing the connection between the application element (40) and the applied adhesive element (12),
wherein method steps iii), iv) and v) are repeated to apply a multiplicity of adhesive elements (12) of the transferred adhesive element arrangement (26), and wherein method steps i) and ii) are repeated after a multiplicity of adhesive elements (12) of the previously transferred adhesive element arrangement (26) have been applied.

## Revendications

1. Système d'application (10) destiné à appliquer une pluralité d'éléments adhésifs (12) sur des substrats (14) à encoller, comprenant :
a) un dispositif de distribution (16), comprenant :
a1) deux unités de distribution (18a-d) ou plus, comprenant chacune une pluralité d'éléments adhésifs (12) ou au moins un précurseur d'élément adhésif à partir duquel le dispositif de distribution (16) peut fabriquer une pluralité d'éléments adhésifs (12), les unités de distribution (18a-d) étant conçues pour délivrer des éléments adhésifs (12),
a2) un système de guidage d'éléments adhésifs (20), et
a3) une unité de transfert (22), comprenant une bande transporteuse sans fin présentant une surface à adhérence réduite et une arête de distribution (24),
le dispositif de distribution (16) étant conçu pour transférer, au moyen du système de guidage d'éléments adhésifs (20), les éléments adhésifs (12) délivrés par les unités de distribution (18a-d) sur la bande transporteuse de l'unité de transfert (22) et former ainsi, sur la surface à adhérence réduite, un agencement d'éléments adhésifs (26) constitué d'une pluralité d'éléments adhésifs (12), l'agencement d'éléments adhésifs (26) comprenant des éléments adhésifs (12) provenant de différentes unités de distribution (18a-d), et
b) un dispositif d'application (30) espacé du dispositif de distribution (16) et disposé sur une unité de déplacement automatisée (28), comprenant :
b1) un élément de transport (32), comprenant une bande transporteuse sans fin présentant une surface à adhérence réduite, qui s'étend à travers une zone de réception (34), une zone de prélèvement (36) et une zone de réserve (38), et
b2) un élément d'application (40),
le dispositif d'application (30) étant conçu de telle sorte qu'une pluralité d'éléments adhésifs (12) déposés sur la surface à adhérence réduite dans la zone de réception (34) puissent être transportés par l'élément de transport (32) jusque dans la zone de réserve (38), et qu'un élément adhésif (12) se trouvant dans la zone de réserve (38) puisse être transporté par l'élément de transport (32) jusque dans la zone de prélèvement (36), le dispositif d'application (30) étant conçu pour prélever, au moyen de l'élément d'application (40), un élément adhésif (12) disposé sur la bande transporteuse de l'élément de transport (32) dans la zone de prélèvement (36), et pour l'appliquer sur un substrat (14) à encoller,
le système d'application (10) étant conçu de telle sorte que le dispositif d'application (30) puisse être déplacé, au moyen de l'unité de déplacement automatisée (28), par rapport au dispositif de distribution (16), jusque dans une position de transfert dans laquelle le système d'application (10) est conçu de telle sorte que les éléments adhésifs (12) de l'agencement d'éléments adhésifs (26) puissent être transférés de l'unité de transfert (22), par-dessus l'arête de distribution (24), sur l'élément de transport (32) et déposés, dans la zone de réception (34), sur la surface à adhérence réduite de l'élément de transport (32), de sorte qu'au moins une partie des éléments adhésifs (12) transférés soit transportée par l'élément de transport (32) jusque dans la zone de réserve (38), et
le système d'application (10) étant conçu, après le transfert des éléments adhésifs (12) de l'agencement d'éléments adhésifs (26) sur l'élément de transport (32), pour transporter, dans un mode d'application, des éléments adhésifs (12) de la zone de réserve (38) jusque dans la zone de prélèvement (36), prélever les éléments adhésifs (12) au moyen de l'élément d'application (40) et les appliquer sur un substrat (14) à encoller.

2. Système d'application (10) selon la revendication 1, dans lequel la surface à adhérence réduite de la bande transporteuse de l'unité de transfert (22) et celle de la bande transporteuse de l'élément de transport (32) sont revêtues d'une couche antiadhésive.

3. Système d'application (10) selon l'une des revendications 1 ou 2, dans lequel la bande transporteuse de l'élément de transport (32) présente une longueur de surface de circulation comprise entre 10*b et 100*b, b étant la largeur de la bande transporteuse de l'élément de transport (32) perpendiculairement au sens de circulation.

4. Système d'application (10) selon l'une des revendications 1 à 3, dans lequel la bande transporteuse de l'élément de transport (32) comprend une fonction d'aspiration destinée à immobiliser les éléments adhésifs (12) sur la surface de l'élément de transport sans fin (32).

5. Système d'application (10) selon l'une des revendications 1 à 4, dans lequel le dispositif d'application (30) est conçu de telle sorte que le sens de transport de la bande transporteuse de l'élément de transport (32) puisse être inversé.

6. Système d'application (10) selon l'une des revendications 1 à 5, dans lequel le dispositif de distribution (16) comprend trois unités de distribution (18a-d) ou plus.

7. Système d'application (10) selon l'une des revendications 1 à 6, dans lequel les unités de distribution (18a-d) sont disposées dans le dispositif de distribution (16) de manière à pouvoir en être détachées de façon réversible et sans destruction.

8. Procédé d'application d'éléments adhésifs (12) sur des substrats (14) à encoller au moyen d'un système d'application (10) selon l'une des revendications 1 à 7, comprenant les étapes suivantes :
i) la formation, sur la bande transporteuse de l'unité de transfert (22) du dispositif d'application (30), d'un agencement d'éléments adhésifs (26) comprenant une pluralité d'éléments adhésifs (12) espacés les uns des autres, l'agencement d'éléments adhésifs (26) comprenant des éléments adhésifs (12) provenant de différentes unités de distribution (18a-d),
ii) le déplacement du dispositif d'application (30) jusque dans la position de transfert et le transfert de l'agencement d'éléments adhésifs (26) de la bande transporteuse de l'unité de transfert (22) à la bande transporteuse de l'élément de transport (32), au moins une partie des éléments adhésifs (12) transférés étant transportée par la bande transporteuse jusque dans la zone de réserve (38),
iii) le transport d'un élément adhésif (12) de la zone de réserve (38) jusque dans la zone de prélèvement (36) au moyen de la bande transporteuse de l'élément de transport (32),
iv) le prélèvement de l'élément adhésif (12) au moyen de l'élément d'application (40) dans la zone de prélèvement (36), avec formation d'une liaison pouvant être défaite de manière réversible et sans destruction entre l'élément d'application (40) et l'élément adhésif (12), et
v) l'application de l'élément adhésif (12) prélevé sur un substrat (14) à encoller et la rupture de la liaison entre l'élément d'application (40) et l'élément adhésif (12) appliqué,
les étapes iii), iv) et v) étant répétées afin d'appliquer une pluralité d'éléments adhésifs (12) de l'agencement d'éléments adhésifs (26) transféré, et les étapes i) et ii) étant répétées après qu'une pluralité d'éléments adhésifs (12) de l'agencement d'éléments adhésifs (26) précédemment transféré ont été appliqués.
